# EUROPEAN PATENT SPECIFICATION

(11) **EP 3 653 041 B1**
(45) Date of publication and mention of the grant of the patent: **25.12.2024**
(21) Application number: 19208462.2
(22) Date of filing: 12.11.2019
(51) Int. Cl.: A01D 43/063

(54) **RIDABLE MOWER MACHINE**
FAHRBARE MÄHMASCHINE
TONDEUSE AUTOPORTÉE

(30) Priority: 13.11.2018 JP 2018213062; 26.12.2018 JP 2018242563; 18.02.2019 JP 2019026706; 25.03.2019 JP 2019056455; 02.10.2019 JP 2019182261
(43) Date of publication of application: 20.05.2020
(73) Proprietor: Kubota Corporation, Osaka-shi, Osaka 556-8601 (JP)
(72) Inventor: HABU, Kentaro, Sakai-shi, Osaka 590-0823 (JP); HASHIMOTO, Taisuke, SAKAI-SHI, OSAKA, 5900823 (JP); KANAI, Toshiki, SAKAI-SHI, OSAKA, 5900823 (JP); KAGO, Tatsuki, SAKAI-SHI, OSAKA, 5900823 (JP); TOKUNAGA, Tatsuro, SAKAI-SHI, OSAKA, 5900823 (JP); TASHIMA, Shinya, SAKAI-SHI, OSAKA, 5900823 (JP); AKAI, Yuto, SAKAI-SHI, OSAKA, 5900823 (JP); MIYAGUCHI, Kazutomo, SAKAI-SHI, OSAKA, 5900823 (JP); AKITA, Masayuki, SAKAI-SHI, OSAKA, 5900823 (JP); NAGAISHI, Shoichiro, SAKAI-SHI, OSAKA, 5900823 (JP); KIMURA, Arisa, SAKAI-SHI, OSAKA, 5900823 (JP); YAMAMOTO, Tomohisa, SAKAI-SHI, OSAKA, 5900823 (JP); NAKATSU, Ryotaro, SAKAI-SHI, OSAKA, 5900823 (JP); HIRAI, Ryota, SAKAI-SHI, OSAKA, 5900823 (JP); KAWAMOTO, Ryusuke, SAKAI-SHI, OSAKA, 5900823 (JP); MATSUMOTO, Ryo, SAKAI-SHI, OSAKA, 5900823 (JP)
(74) Representative: Cabinet Beau de Loménie

(56) References cited:
- EP-A1- 2 559 333
- EP-A1- 3 050 424
- WO-A1-2018/123587
- JP-A- 2001 329 560
- JP-A- 2010 000 023
- JP-A- 2014 212 709
- JP-A- H10 331 184
- US-A- 3 608 284
- US-A- 4 244 428
- US-A- 5 321 939
- US-A1- 2002 083 694
- US-A1- 2002 083 696
- US-A1- 2005 005 587

## Description

### BACKGROUND OF THE INVENTION

### 1. Field of the Invention

The present invention relates to a cut grass full-state detection apparatus that detects a full state of a grass collecting container that stores cut grass cut by a mower apparatus:

### 2. Description of the Related Art

### (1) First Related Art

A ridable mower machine disclosed in JP 2015-092845A (or EP 2870854A1 corresponding thereto) includes: a mower; a grass collecting container that collects cut grass from the mower; a linkage mechanism that has a plurality of linkage members and supports the grass collecting container such that the grass collecting container can be lifted and lowered, and opened and closed; and a hydraulic actuator for driving the grass collecting container.

With this configuration, there is the risk of a hydraulic hose that is connected to the hydraulic actuator coming into contact with an obstacle and being damaged during travel or the like. Therefore, there is demand for a ridable mower machine in which the hydraulic hose can be protected.

### (2) Second Related Art

In a ridable mower machine disclosed in JP 2016-140264A (or EP 3 050 424 A1 corresponding thereto), a mower-side duct portion that is formed in a mower apparatus, and a container-side duct portion discharge portion that is fixed to the grass collecting container, and the entrance of the grass collecting container-side duct are fitted to and connected to each other. Cut grass is blown and guided to the grass collecting container by conveyance wind generated by the mower apparatus, through a conveyance path that continues from the discharge portion of the mower apparatus to the inside of the grass collecting container-side duct.

The bottom portion of the grass collecting duct is provided so that the orientation thereof can change as the mower apparatus is lifted and lowered, such that the bottom portion of the conveyance path is kept continuous even though the mower apparatus is allowed to be lifted and lowered, where the mower apparatus is supported using a linkage mechanism so as to be able to be lifted and lowered.

In this configuration, the lower surface of the container-side bottom plate is flat, and therefore the contact angle of the container-side bottom plate with respect to the trajectory of a press-up cam that presses and swings the lower surface of the container-side bottom plate upward gradually changes, and there is the risk of the distance between the mower-side bottom plate and the container-side bottom plate being too large, depending on the cutting height. That is to say, there is room for improvement in this regard.

### (3) Third Related Art

A grass mower disclosed in JP 2016-140264 A (or EP 3 050 424 A1 corresponding thereto) includes a mower that is located in the lower portion of a vehicle body and feeds cut grass outward from a discharge portion, a duct that is connected to and in communication with the discharge portion and guides the cut grass that is fed from the discharge portion, and a grass collecting portion that is located in the rear portion of the vehicle body and collects the cut grass that is guided by the duct.

With this type of grass mower, the discharge portion formed in the mower and the entrance portion of the duct are connected to each other by insertion mating. Conveying wind produced by the mower is used to blow and guide the cut grass to the grass collecting portion via a conveying passage that connects the discharge portion to the interior of the duct. The duct is supported to a frame pertaining to the grass collecting portion. In order to allow the raising and lowering of the mower, which is supported so as to be capable of being raised and lower via a link mechanism, while also maintaining a state of being connected to the bottom portion of the conveying passage, the bottom portion of the duct is provided such that the orientation can be changed relative to the duct main body in accordance with the raising/lowering of the mower.

With the above-described conventional configuration, the discharge portion is supported to the mower, and the duct is supported to the frame pertaining to the grass collecting portion, and therefore there are cases where the grass collecting portion rolls relative to the vehicle body during grass mowing, and the grass collecting portion comes into contact with an object such as a furrow and is subjected to a large amount of force. In such a case, a gap is sometimes formed between the discharge portion and the entrance portion of the duct that is connected to the discharge portion. If this gap increases in size, there is a risk that cut grass passing through the duct due to guiding wind will be discharged to the outside through the gap.

In particular, with the above-described configuration in which the orientation of the bottom portion of the duct can be changed relative to the duct main body, the duct main body is formed with a downward-open U shape including a ceiling face and right and left side faces, and therefore there is a risk of deformation of portions on the lower end side of the duct main body.

In view of this, there is a desire to prevent cut grass conveyed through the duct from being discharged to the outside.

### (4) Fourth Related Art

A mower machine disclosed in JP 2010-004799A (or FR 2 932 947 A1 and US 2009/0320433 A1 corresponding thereto) includes: a grass collecting container that collects cut grass; a cut grass amount detection apparatus that measures the weight of grass stored in the grass collecting container; and a full-state alarm apparatus that issues an alarm indicating that the grass collecting container is full of grass.

The cut grass amount detection apparatus includes: a sensor plate that is swingable and comes into contact with cut grass via a detection hole so as to receive the weight of cut grass collected in the grass collecting container; a spring that biases the sensor plate such that the sensor plate swings to be in a reference orientation; and a detection means that detects the swing of the sensor plate from the reference orientation. The cut grass amount detection apparatus detects that the grass collecting container is full of cut grass upon the sensor plate swinging by a predetermined amount and moving away from a detection switch. The full-state alarm apparatus issues an alarm upon the cut grass amount detection apparatus detects a full state. Note that the amount of swing through which the sensor plate presses the detection switch is adjusted using a spring, and thus the weight corresponding to the full state and the sensitivity of the grass amount detection apparatus are adjusted using the spring.

However, for example, due to vibration caused when the mower machine travels over a step upward or downward, the expansion and contraction of the spring varies, the sensor plate of the cut grass amount detection apparatus vibrates, and consequently the detection switch may be unable to accurately detect the full state. As a result, the full-state alarm apparatus may issue an alarm before the full state is reached, or may not issue an alarm despite the full state having been reached. There is room for improvement in this regard.

Documents US2002/083696, JP2014/212709, JPH10331184 and JP2001329560 disclose other known examples of mower machines.

Document US 5 321 939 A discloses a cut grass full-state detection apparatus that detects a full state of a grass collecting container that stores cut grass cut by a mower apparatus according to the preamble of claim 1.

### SUMMARY OF THE INVENTION

The invention is defined by the appended claims. A cut grass full-state detection apparatus that detects a full state of a grass collecting container that stores cut grass cut by a mower apparatus, comprising:
a cut grass amount detection unit configured to detect the amount of cut grass stored in the grass collecting container;
a notification unit;
a timer; and
a control unit, the control unit being configured to instruct the timer to measure a time period that has elapsed from when the cut grass amount detection unit detected a predetermined amount of cut grass, and instruct the notification unit to issue an alarm when the cut grass amount detection unit continuously detects the predetermined amount of cut grass for a predetermined period.

With this configuration, an alarm is issued only when it is highly probable that the grass collecting container is full. Therefore, it is possible to prevent an alarm indicating, that the grass collecting container is full, from being erroneously issued, and an alarm indicating that the grass collecting container is full can be more accurately issued. As a result, it is possible to prevent unnecessary work from being performed in response to an erroneous alarm, and it is possible to perform appropriate work in an appropriate situation.

The cut grass full-state detection apparatus further includes:
a drive detection unit configured to detect that the mower apparatus is being driven,
wherein the notification unit includes a first notification unit and a second notification unit, and
the control unit is configured such that
   if the drive detector has not detected that the mower apparatus is being driven, the control unit instructs the first notification unit to issue an alarm when the cut grass amount detection unit has continuously detected the predetermined amount of cut grass for the predetermined period, and
   if the drive detector has detected that the mower apparatus is being driven, the control unit instructs the first notification unit and the second notification unit to issue an alarm when the cut grass amount detection unit has continuously detected the predetermined amount of cut grass for the predetermined period.

With this configuration, it is possible to differently combine the notification units that issue an alarm according to the driving status of the mower apparatus. Therefore, it is possible to perform appropriate work according to the driving status of the mower apparatus. For example, the amount of stored cut grass does not increase while cutting work is not being performed. Therefore, there is often no need to perform work to discharge cut grass, for example. In such a case, there is less need to issue an alarm indicating the full state. It is possible to issue a different alarm at a different importance level according to the driving status of the mower apparatus, and therefore it is possible to issue a more appropriate alarm and realize more appropriate work corresponding to the alarm.

In one preferable embodiment, the control unit is configured to stop the notification unit from issuing an alarm when the cut grass amount detection unit detects that the amount of cut grass has fallen below the predetermined amount while the notification unit issues the alarm.

With this configuration, when the cut grass amount detection unit is no longer detecting the full state, the alarm is immediately stopped. Therefore, it is possible to prevent an erroneous alarm from being continuously issued, and it is possible to issue a more appropriate alarm.

In one preferable embodiment, the control unit is configured to
stop the first notification unit from issuing an alarm when the cut grass amount detection unit detects that the amount of cut grass has fallen below the predetermined amount while the first notification unit issues the alarm, and
stop the second notification unit from issuing an alarm when the cut grass amount detection unit detects that the amount of cut grass has fallen below the predetermined amount, or the drive detection unit no longer detects that the mower apparatus is being driven, while the second notification unit issues the alarm.

With this configuration, when a combination of different alarms are issued according to the driving status of the mower apparatus, each alarm can be stopped according to the detection status of the full state and the driving status of the mower apparatus. Therefore, it is possible to prevent each alarm from being erroneously issued continuously, and it is possible to issue more appropriate alarms.

In one preferable embodiment, the first notification unit is an indicator, and the second notification unit is a buzzer.

During cutting work, it is difficult for the driver to notice a full-state alarm if the alarm needs to be visually checked, such as in the case of an indicator. With the above-described configuration, during cutting work, an alarm is issued from a buzzer in addition to an alarm from the indicator, and thus it is possible to make it easier for the driver to notice the full-state alarm. As a result, it is possible to issue an appropriate alarm that is suitable for the work situation, and it is possible to perform more efficient cutting work.

### (5) Other features and advantages resulting from the features would become apparent from the following description.

### BRIEF DESCRIPTION OF THE DRAWINGS

Fig. 1 is a left side view showing a ridable mower machine according to a first embodiment (the same applies up to Fig. 9).
Fig. 2 is a plan view showing the ridable mower machine.
Fig. 3 is a left side view showing a rear portion of the ridable mower machine.
Fig. 4 is a left side view showing a cover.
Fig. 5 is a rear cross-sectional view showing a left cover.
Fig. 6 is a rear cross-sectional view showing the left cover.
Fig. 7 is a rear cross-sectional view showing a right cover.
Fig. 8 is a perspective view showing a guide for a grass collecting container according to a variation (1).
Fig. 9 is a perspective view showing a guide for a grass collecting container according to a variation (2).
Fig. 10 is an overall side view showing a ridable mower machine according to a second embodiment (the same applies up to Fig. 15).
Fig. 11 is a side view showing a mower-side duct portion and a container-side duct portion.
Fig. 12 is a lateral plan view showing the mower-side duct portion and the container-side duct portion.
Fig. 13 is an exploded perspective view showing the mower-side duct portion and the container-side duct portion.
Fig. 14 is a vertical side view showing the mower-side duct portion and the container-side duct portion.
Fig. 15 illustrates an operation of a container-side bottom plate related to a cam member.
Fig. 16 is a diagram showing a third embodiment (the same applies hereinafter up to Fig. 29), and specifically is an overall side view of a grass mower.
Fig. 17 is an overall plan view of the grass mower.
Fig. 18 is a plan view of a mower.
Fig. 19 is a side view of a mower arrangement portion in a ground contact state.
Fig. 20 is a side view in vertical section of a discharge portion and a duct in a ground contact state.

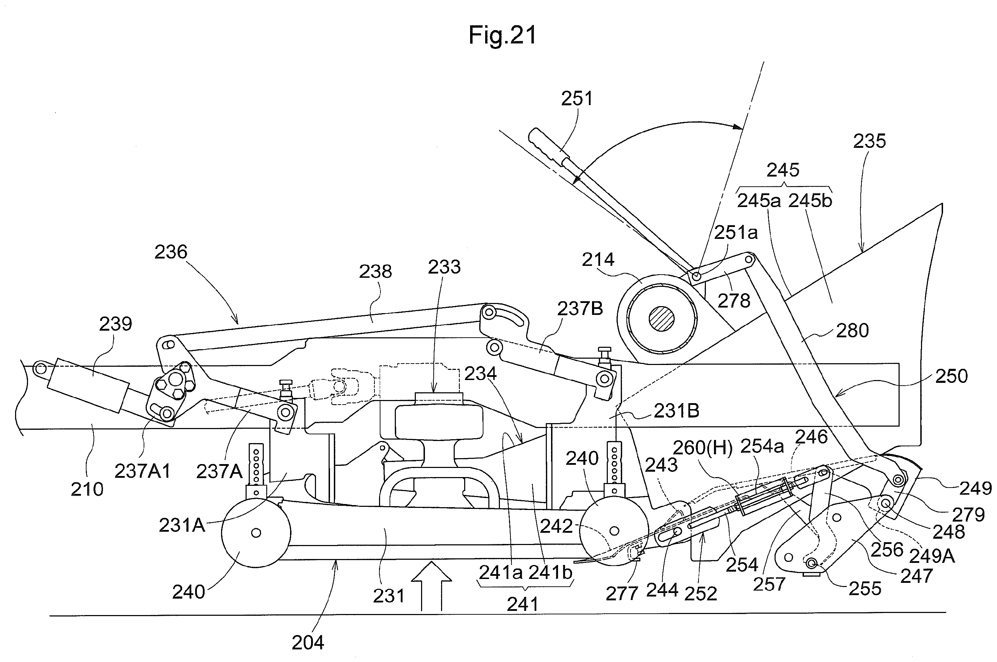

Fig. 21 is a side view of the mower arrangement portion in a raised state.
Fig. 22 is a side view in vertical section of the discharge portion and the duct in the raised state.
Fig. 23 is a plan view in horizontal section of the discharge portion and the duct.
Fig. 24 is a plan view in vertical section of the duct.
Fig. 25 is a perspective view of an operation linking configuration.
Fig. 26 is a block diagram of an abnormality detection device.
Fig. 27 is a plan view showing variations (1) and (2).
Fig. 28 is a side view in vertical section showing the variations (1) and (2).
Fig. 29 is a left side view showing the variations (1) and (2).
Fig. 30 is an overall side view showing a ridable mower machine according to a fourth embodiment (the same applies up to Fig. 41).
Fig. 31 is a side view of a grass collecting container in a lowered collecting state.
Fig. 32 is a side view of the grass collecting container in a lifted discharging state.
Fig. 33 is a vertical side view of an area of the grass collecting container where a cut grass amount detection apparatus is disposed.
Fig. 34 is a side view of the cut grass amount detection apparatus in a non-detection state.
Fig. 35 is a side view of the cut grass amount detection apparatus in a full-state detection state.
Fig. 36 is a front view of the area of the grass collecting container where the cut grass amount detection apparatus is disposed.
Fig. 37 is perspective view of the cut grass amount detection apparatus.
Fig. 38 is a schematic diagram illustrating a configuration for detecting a full state and issuing an alarm.
Fig. 39 is a diagram showing operation conditions for a full-state alarm apparatus.
Fig. 40 is a diagram showing operation timing of the full-state alarm apparatus.
Fig. 41 is a diagram illustrating a flow of the detection of a full state and the issuance of an alarm.

### DETAILED DESCRIPTION OF PREFERRED EMBODIMENTS

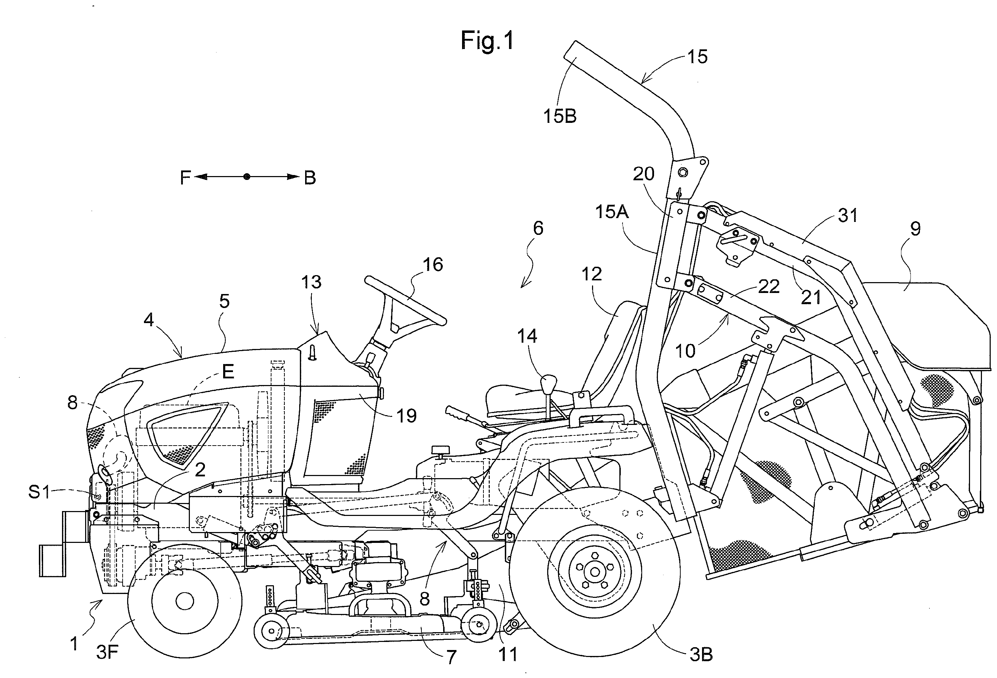

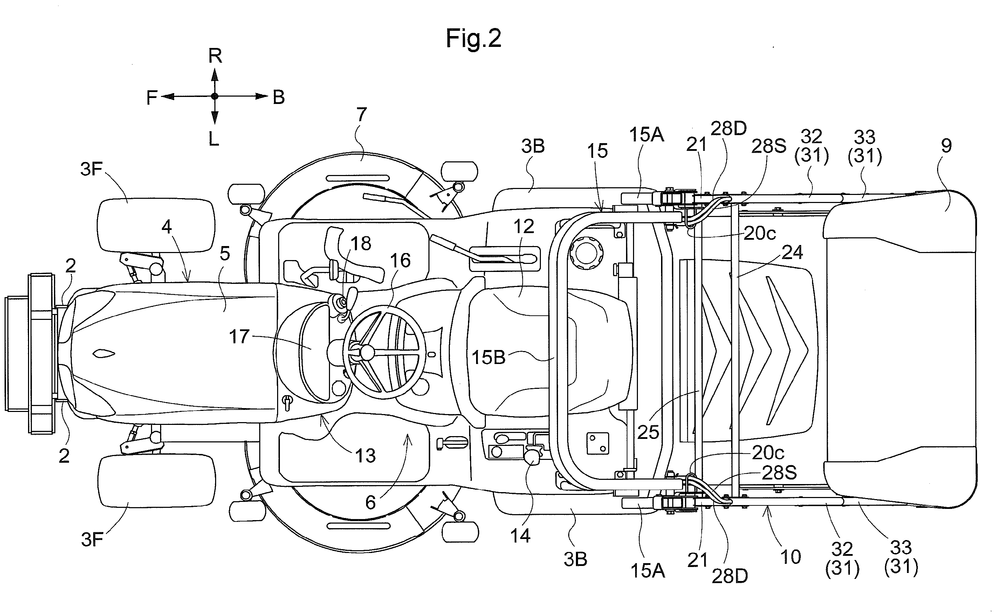

In the description of each embodiment below, the direction indicated by an arrow F is referred to as "forward", the direction indicated by an arrow B is referred to as "rearward", the direction indicated by an arrow L is referred to as "leftward", and the direction indicated by an arrow R is referred to as "rightward" (see Figs. 1 and 2, for example).

### FIRST UNCLAIMED EMBODIMENT

### Overall Configuration of Ridable Mower Machine

Figs. 1 and 2 show a ridable mower machine. This ridable mower machine includes a travel machine body 1. The travel machine body 1 includes: a machine body frame 2; a pair of right and left front wheels 3F that are steerable; and a pair of right and left rear wheels 3B that are drivable. A prime mover part 4 is provided in a front portion of the travel machine body 1. The prime mover part 4 includes an engine E and a bonnet 5 that houses the engine E and so on. The bonnet 5 is configured to be able to swing to open and close about a front pivot S1.

A driver part 6 is provided rearward of the prime mover part 4. A mower 7 is provided below the travel machine body 1, between the front wheels 3F and the rear wheels 3B. The mower 7 is supported by the machine body frame 2 so as to be able to be lifted and lowered, using a linkage mechanism 8. A grass collecting container 9 that collects cut grass from the mower 7 is supported rearward of the travel machine body 1. The grass collecting container 9 is supported by the machine body frame 2 using a linkage mechanism 10, so as to be able to be lifted and lowered, and opened and closed. A grass collecting duct 11 that guides cut grass from the mower 7 toward the grass collecting container 9 is provided so as to span between the mower 7 and the grass collecting container 9.

The driver part 6 includes a driver's seat 12, an operation tower 13, and a work lever 14. A ROPS 15 is provided around the driver's seat 12. The ROPS 15 includes right and left support pillars 15A, and an arch 15B that spans between the right and left support pillars 15A. The arch 15B is supported by the right and left support pillars 15A so as to be foldable. The operation tower 13 is provided with a steering handle 16, an indicator panel 17, a key switch 18 for inputting an instruction to start the engine E, and a panel 19 that covers, for example, a pillar (not shown) that supports the steering handle 16. The work lever 14 is a lever that is used to lift and lower the mower 7, lift and lower the grass collecting container 9, and open and close the grass collecting container 9.

### Linkage Mechanism

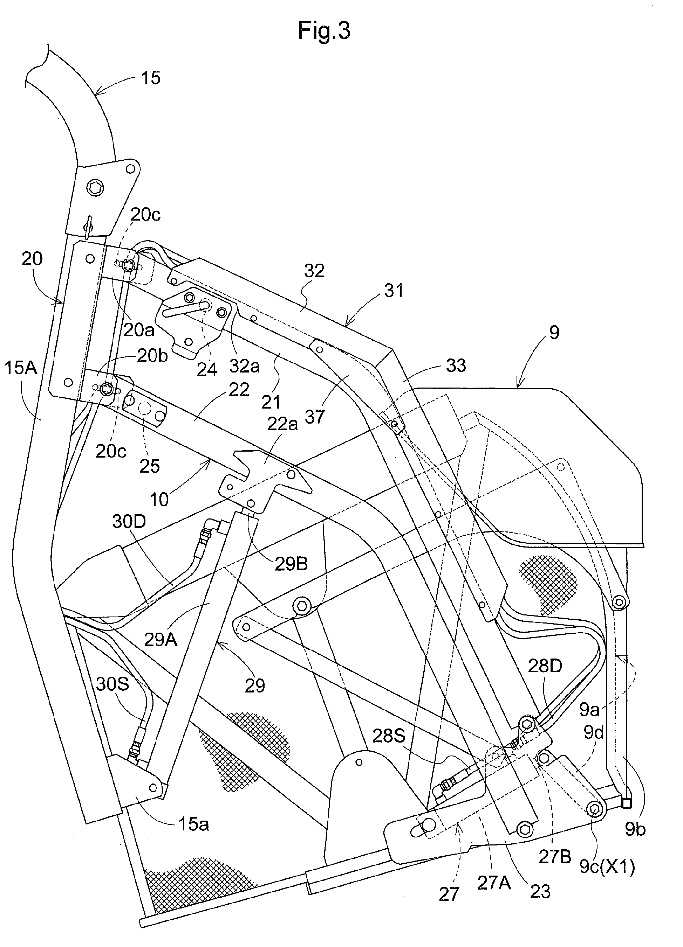

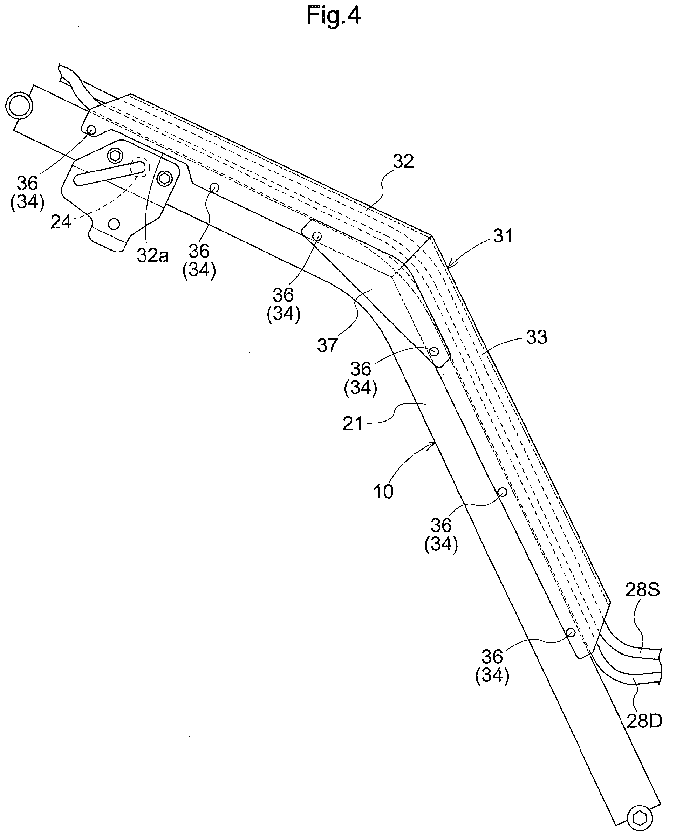

As shown in Figs. 3 and 4, the linkage mechanism 10 supports the grass collecting container 9 so as to be able to be lifted and lowered, and opened and closed. The linkage mechanism 10 is supported by the right and left support pillars 15A, using right and left brackets 20. The linkage mechanism 10 includes right and left upper links 21, right and left lower links 22, and right and left link plates 23. The upper links 21, the lower links 22, and the link plates 23 each correspond to a linkage member.

The upper links 21 and the lower links 22 are supported by the support pillars 15A, using the brackets 20. Each bracket 20 includes an upper support portion 20a that supports an upper link 21 so as to be swingable upward and downward, and a lower support portion 20b that supports a lower link 22 so as to be swingable upward and downward. Each link plate 23 is provided so as to span between a leading end portion of an upper link 21 and a leading end portion of a lower link 22. An upper coupling pipe 24 that couples the right and left upper links 21 to each other is provided so as to span between front portions thereof. A lower coupling pipe 25 that couples the right and left lower links 22 to each other is provided so as to span between front portions thereof.

### Grass Collecting Container

The grass collecting container 9 is provided with a lid 9b that covers a discharge port 9a thereof, so as to be able to be opened and closed. The grass collecting container 9 is supported by the right and left link plates 23 so as to be swingable about a swing axis X1, using a support shaft 9c. The swing axis X1 is a swing axis that extends in a right-left direction of the machine body.

Open/close cylinders 27 (corresponding to a "hydraulic actuator") for opening and closing the grass collecting container 9 are provided on the right and left side. Each open/close cylinder 27 is provided so as to span between the grass collecting container 9 and a link plate 23. Each open/close cylinder 27 includes a cylinder tube 27A and a piston rod 27B. The support shaft 9c is provided with arms 9d to which leading end portions of the piston rods 27B are coupled. A hydraulic hose 28S for supplying oil and a hydraulic hose 28D for discharging oil are connected to each cylinder tube 27A.

The hydraulic hoses 28S and 28D extend upward along the support pillars 15A so as to be located laterally inward of the brackets 20. The upper support portions 20a and the lower support portion 20b are respectively provided with restriction portions 20c that restrict the hydraulic hoses 28S and 28D from swinging. The restriction portions 20c are each formed from a round rod member that is substantially U-shaped, such that the hydraulic hoses 28S and 28D can be passed therethrough.

The hydraulic hoses 28S and 28D extend along the upper surfaces of the upper links 21 toward the open/close cylinders 27. Specifically, the hydraulic hoses 28S and 28D are provided along portions that span between bracket 20-side end portions and link plate 23-side portions of the upper surfaces of the upper links 21.

Up/down cylinders 29 for lifting and lowering the grass collecting container 9 are provided on the right and left side. The up/down cylinders 29 are provided so as to span between the lower links 22 and the support pillars 15A, respectively. Each up/down cylinder 29 includes a cylinder tube 29A and a piston rod 29B. Front portions of the lower links 22 are provided with brackets 22a to which leading end portions of the piston rods 29B are coupled. Lower end portions of the support pillars 15A are provided with brackets 15a to which base end portions of the cylinder tubes 29A are coupled. A hydraulic hose 30S for supplying oil and a hydraulic hose 30D for discharging oil are connected to each cylinder tube 29A.

With such a configuration, upon the up/down cylinders 29 extending, the upper links 21 and the lower links 22 swing upward, and the grass collecting container 9 moves upward. Thereafter, upon the open/close cylinders 27 extending with the grass collecting container 9 being in a lifted state, the grass collecting container 9 swings rearward about the swing axis X1 (a dump operation) and the lid 9b opens. Thus, the grass collecting container 9 takes an orientation for discharging grass from the discharge port 9a.

### Covers

As shown in Figs. 4 to 7, covers 31 that cover portions that extend along the upper surfaces of the upper links 21, of the hydraulic hoses 28S and 28D, are provided on the right and left side. The covers 31 have a shape that is open downward (substantially an inverted U-shape in a cross-sectional view) so as to cover portions that extend along the upper surfaces of the upper links 21, of the hydraulic hoses 28S and 28D. Each cover 31 is formed so as to be dividable into portions (two portions, namely a front portion and a rear portion) that extend in the longitudinal direction of an upper link 21, at a position corresponding to a bent portion of the upper link 21. Each cover 31 includes a front cover member 32 that constitutes a portion that is forward of the bent portion of the upper link 21, of the cover 31, and a rear cover member 33 that constitutes a portion that is rearward of the upper link 21, of the cover 31. The front cover member 32 and the rear cover member 33 are continuous, with the rear end of the front cover member 32 and the front end of the rear cover member 33 abutting against each other.

Both lateral sides of the front portion of the front cover member 32 are provided with a recess 32a that is open downward, in order to avoid interference with, for example, a coupling portion of the upper coupling pipe 24 and the upper link 21. The front cover member 32 is detachably fixed to the upper link 21, using a plurality of (e.g. three) bolt fixing structures 34, such that the lateral sides of the front cover member 32 extend along the side surfaces of the upper link 21. The rear cover member 33 is detachably fixed to the upper link 21, using a plurality of (e.g. three) bolt fixing structures 34, such that the lateral sides of the rear cover member 33 extend along the side surfaces of the upper link 21.

Each bolt fixing structure 34 includes a through shaft 35 that penetrates through the lateral sides of the upper link 21, and a bolt 36 that is inserted into a screw hole 35a that is formed in the through shaft 35. The through shaft 35 is inserted into the cover 31 from the inside in a lateral direction. The bolt 36 is inserted into the cover 31 from the outside in a lateral direction. A head 35b of the through shaft 35 and a head 36a of the bolt 36 sandwich the cover 31 from both lateral sides.

A side plate 37 is provided so as to span between the lateral outer portion of the rear portion of the front cover member 32 and the lateral outer portion of the front portion of the rear cover member 33. The side plate 37 is fixed to the cover 31, using two bolts, namely front and rear bolts 36, with the side plate 37 abutting against the front cover member 32 and the rear cover member 33 from a lateral outer side.

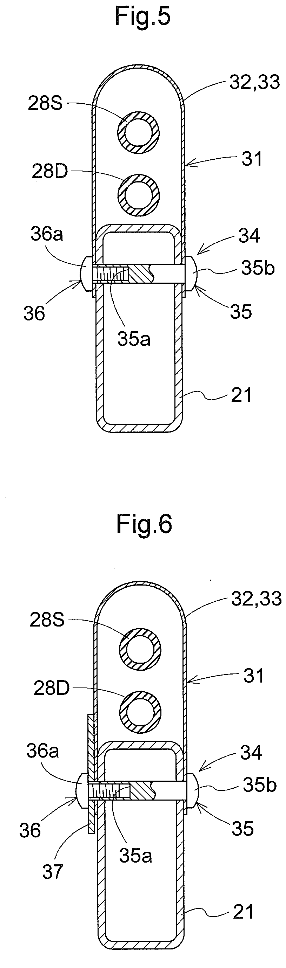

As shown in Figs. 5 and 6, in the left cover 31, the hydraulic hoses 28S and 28D are arranged next to each other in a top-bottom direction. Specifically, the hydraulic hose 28S and the hydraulic hose 28D are arranged next to each other in this order from the top.

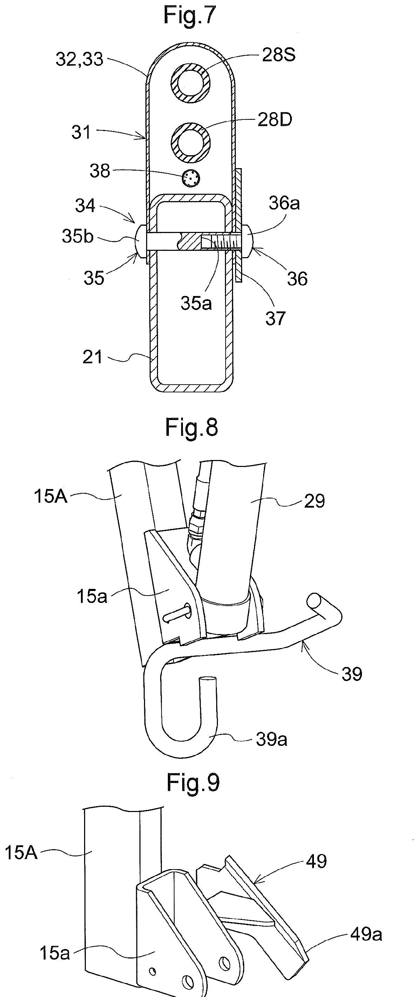

As shown in Fig. 7, a harness 38 for a full-state sensor (not shown) that detects that the grass collecting container 9 is full of cut grass is provided along the upper surface of the right upper link 21. A portion that extends along the upper surface of the right upper link 21, of the harness 38, is also covered by the right cover 31.

In the right cover 31, the hydraulic hoses 28S and 28D and the harness 38 are arranged next to each other in a top-bottom direction. Specifically, the hydraulic hose 28S, the hydraulic hose 28D, and the harness 38 are arranged next to each other in this order from the top.

### Variations of First Embodiment

(1) As shown in Fig. 8, right and left guides 39 that guide the grass collecting container 9 when the grass collecting container 9 is to be housed may be provided. The guides 39 are provided on lower portions of the brackets 15a. Each guide 39 is formed from a round rod member that has a bent shape. A hook 39a for fixing the machine body to a load carrying platform or the like, using a rope, is formed integrally with each guide 39.
(2) Guides 49 shown in Fig. 9 may be used instead of the guides 39 according to the above-described variation (1). Each guide 49 is attached to an inner side portion of a bracket 15a. The guides 49 are made from a sheet metal. Each guide 49 is provided with a guide portion 49a that guides the grass collecting container 9.
(3) Although the "hydraulic actuator" is the open/close cylinders 27 in the above-described embodiment, the "hydraulic actuator" may be the up/down cylinders 29.
(4) In the above-described embodiment, each cover 31 is formed so as to be dividable into portions in the longitudinal direction of an upper link 21, at a position corresponding to the bent portion of the upper link 21. However, each cover 31 may be formed so as to be dividable into portions in the longitudinal direction of an upper link 21, at a position other than the position corresponding to the bent portion of the upper link 21.
(5) In the above-described embodiment, each cover 31 is formed so as to be dividable into two portions, namely a front portion and a rear portion. However, each cover 31 may be formed so as to be dividable into three or more portions in a front-rear direction. Alternatively, each cover 31 may be formed so as to be dividable into portions in a right-left direction. Alternatively, the covers 31 may be formed so as to be undividable.
(6) In the above-described embodiment, the hydraulic hoses 28S and 28D are provided along the upper surfaces of the upper links 21. However, the hydraulic hoses 28S and 28D may be provided along the lower surfaces or side surfaces of the upper links 21. Alternatively, the hydraulic hoses 28S and 28D may be provided along the upper surfaces, the lower surfaces, or side surfaces of the lower links 22.
(7) In the above-described embodiment, each front cover member 32 is fixed to an upper link 21, using bolt fixing structures 34, such that the lateral sides of the front cover member 32 extend along the side surfaces of the upper link 21. Also, each rear cover member 33 is fixed to an upper link 21, using bolt fixing structures 34, such that the lateral sides of the rear cover member 33 extend along the side surfaces of the upper link 21. However, structures for fixing the covers 31 are not limited to the structures according to the above-described embodiment.
(8) In the above-described embodiment, the covers 31 are formed so as to have a shape that opens downward (substantially an inverted U-shape in a cross-sectional view). However, the shape of the covers 31 is not limited to the shape according to the above-described embodiment.
(9) Note that the present disclosure is not limited to the above-described embodiment or the above-described variations, and may be variously modified. Also, configurations of a plurality of embodiments may be combined as appropriate as long as no contradiction occurs.

### SECOND UNCLAIMED EMBODIMENT

### Overall Configuration

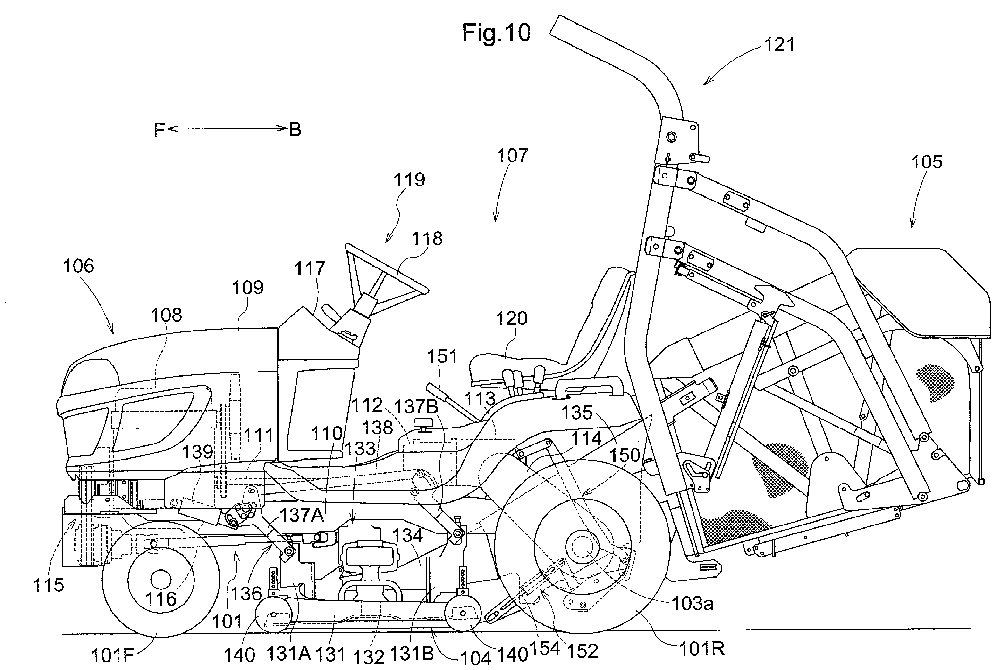

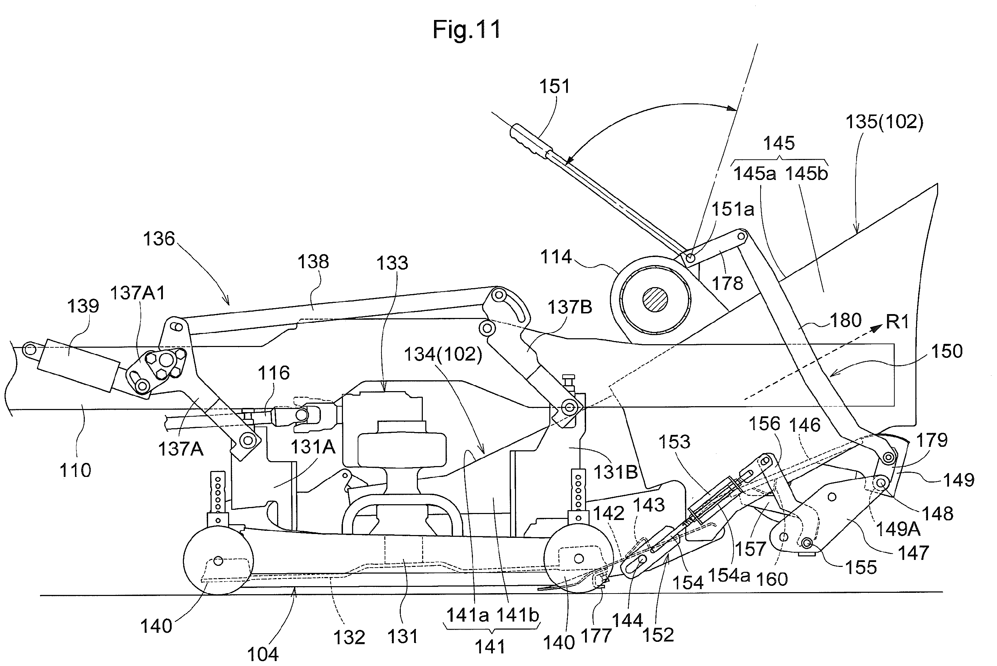

As shown in Figs. 10 and 11, the mower machine is provided with a pair of right and left front wheels 101F that are steerable, in a front portion of the travel machine body 101, and a pair of right and left rear wheels 101R that are drivable, in a rear portion of the travel machine body 101, and thus the mower machine is configured to be self-propelled. A rear discharge-type mower apparatus 104 is supported and suspended below the vehicle body, at a position between the front wheels 101F and the rear wheels 101R, so as to be able to be lifted and lowered. A grass collecting container 105, which serves as a grass collector that stores grass cut by the mower apparatus 104, is provided rearward of the travel machine body 101.

The mower apparatus 104 and the grass collecting container 105 are in communication with each other via a grass collecting duct 102 in which a cut grass conveyance path R1 is provided. The grass collecting duct 102 includes: a mower-side duct portion 134 that is fixed to the mower apparatus 104 described below and moves up and down so as to follow the mower apparatus 104 as the mower apparatus 104 moves up and down; and a container-side duct portion 135 that is fixed to a position on the grass collecting container 105-side.

A prime mover part 106 is provided in a front portion of the travel machine body 101, and a ridable driver part 107 is provided rearward of the prime mover part 106. In the prime mover part 106, an engine 108 is housed in an engine bonnet 109, and is mounted on and supported by the machine body frame 110. Power that is taken out from the rear side of the engine 108 is input to a hydraulic static continuously variable transmission apparatus (HST) 112 that is located rearward of the engine 108, via a power transmission shaft 111 that extends rearward. Output from the hydraulic static continuously variable transmission apparatus 112 is transmitted to right and left rear axles via a transmission case 113 that is provided in a rear portion and chain-type power transmission mechanisms (not shown) that are housed in right and left power transmission cases 114, and thus the rear wheels 101R are driven. The power transmission cases 114 are provided so as to extend obliquely rearward and downward from lateral sides of the transmission case 113.

A power take-off mechanism 115 that is constituted by a belt power transmission mechanism is provided forward of the engine 108, and power from the engine 108 is transmitted to the mower apparatus 104 via a PTO shaft 116 that is provided in the power take-off mechanism 115 and a power transmission mechanism 133 that is provided above the mower apparatus 104.

The ridable driver part 107 is provided with an operation panel 117 that is continuous with a rear portion of the engine bonnet 109, and an operation unit 119 that is provided with, for example, a steering wheel 118 that can be operated to steer the front wheels 101F. A driver's seat 120 is provided rearward of the operation unit 119, and a ROPS 121 is provided rearward of the driver's seat 120.

### Configuration of Mower Apparatus

The mower apparatus 104 is configured such that two blades 132 are arranged on the right and left side in a cutting blade housing 131. The left blade 132 is driven to rotate clockwise, whereas the right blade 132 is driven to rotate counterclockwise. In this way, the blades 132 are configured to rotate in opposite directions. The mower apparatus 104 is configured such that the left blade 132 is driven to rotate clockwise, the right blade 132 is driven to rotate counterclockwise, and cut grass is conveyed by a conveyance wind generated by the rotation of the blades 132 and is discharged rearward from the mower-side duct portion 134 provided near the center of a rear portion of the cutting blade housing 131. Cut grass discharged from the mower-side duct portion 134 is guided by the container-side duct portion 135 for collecting grass connected to the mower-side duct portion 134, and is sent to and stored in the grass collecting container 105.

The mower apparatus 104 is supported by the machine body frame 110 so as to be able to be lifted and lowered by an up/down linkage mechanism 136. The up/down linkage mechanism 136 is provided with a pair of front and rear swing links 137A and 137B on both right and left sides, where upper end portions of the swing links are pivotally coupled to the machine body frame 110, and lower end portions thereof are pivotally coupled to the cutting blade housing 131.

Two pairs of right and left vertical extension portions 131A and 131B that extend upward from the upper surface of the cutting blade housing 131 are provided so as to respectively stand upright at front positions and rear positions of an upper portion of the cutting blade housing 131. The front vertical extension portions 131A and the rear vertical extension portions 131B each have a substantially L shape in plan view, which is formed by bending a plate member, and are each welded to and integrated with the upper surface of the cutting blade housing 131.

Ends of the front swing links 137A are coupled to the machine body frame 110 of the travel machine body 101 so as to be swingable about a lateral axis, and the opposite ends of the front swing links 137A are respectively coupled to upper portions of the front vertical extension portions 131A so as to be swingable about a lateral axis. Ends of the rear swing links 137B are respectively coupled to the machine body frame 110 of the travel machine body 101 so as to be swingable about a lateral axis, and the opposite ends of the rear swing links 137B are coupled to upper portions of the rear vertical extension portions 131B so as to be swingable about a lateral axis.

The upper ends of the front swing links 137A and the rear swing links 137B are interlocked with each other by coupling rods 138, and ends of hydraulic cylinders 139 for lifting and lowering are respectively pivotally coupled to operation portions 137A1 that are formed in the front swing links 137A. The opposite ends of the hydraulic cylinders 139 are pivotally coupled to the machine body frame 110. The mower apparatus 104 is configured to be able to be lifted and lowered upon the swing links 137A and 137B swinging as a result of the hydraulic cylinders 139 expanding and contracting. In a cutting work state, the mower apparatus 104 performs reaping travel so as to follow gauge wheels 140 that are in a grounded state. The gauge wheels 140 are provided on a lower end portion of the cutting blade housing 131.

### Grass Collecting Duct

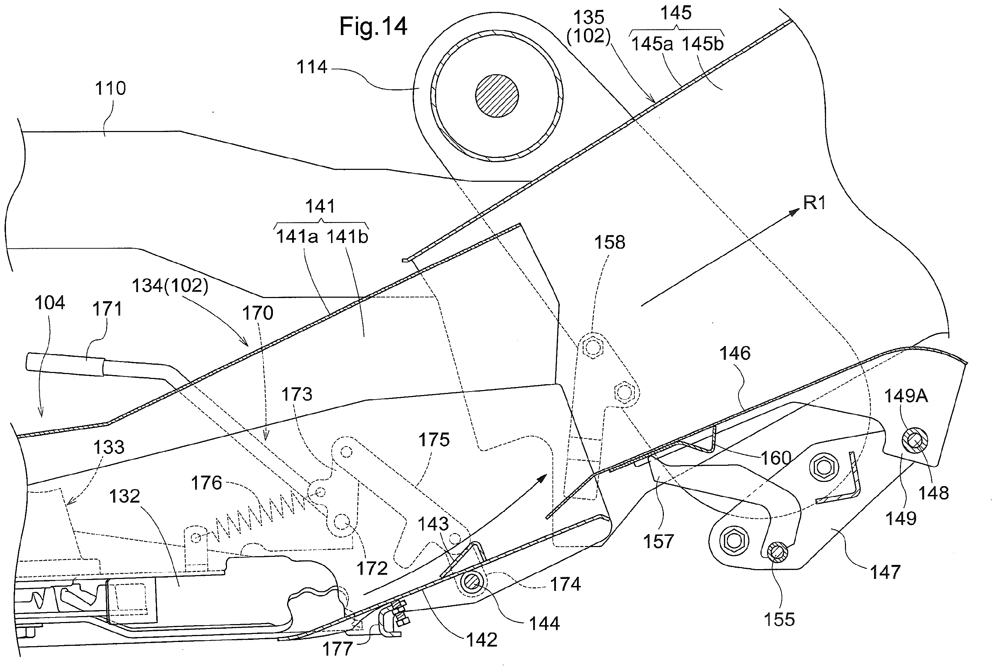

As shown in Figs. 11 to 14, the mower-side duct portion 134 is formed at the center in the right-left direction of a rear portion of the cutting blade housing 131 in the right-left direction, so as to extend rearward and obliquely upward. The mower-side duct portion 134 includes a mower-side duct body 141 that is provided integrally with the cutting blade housing 131, and a mower-side bottom plate 142 with which a bottom portion of the mower-side duct body 141 is formed. The mower-side duct body 141 includes a top surface 141a and right and left side surfaces 141b, and is formed so as to have an inverted U-shape when seen in a front-rear direction. The mower-side bottom plate 142, which has a plate shape, is provided so as to cover a lower portion of the internal space of the mower-side duct body 141. Therefore, a substantially rectangular tube-shaped conveyance path that extends rearward and obliquely upward is formed by the mower-side duct body 141 and the mower-side bottom plate 142. An upward guide surface 143 that guides cut grass in an upward direction is formed on the mower-side bottom plate 142 in the middle of the conveyance path.

As shown in Figs. 11 to 14, the mower-side bottom plate 142 is supported by a support shaft 144 that is provided so as to span between the right and left side surfaces 141b of the mower-side duct body 141, so as to be rotatable upward and downward relative to the cutting blade housing 131. The mower-side bottom plate 142 is linked by a first linkage mechanism 170 with a first operation lever 171 that is provided in the vicinity of the driver's seat 120, and the mower-side bottom plate 142 is configured to be able to swing upon the first operation lever 171 being manually operated. If cut grass has blocked the mower-side duct portion 134 during cutting work, it is possible to clear the block caused by the grass and enable it to be conveyed by operating the first operation lever 171 so as to swing back and forth.

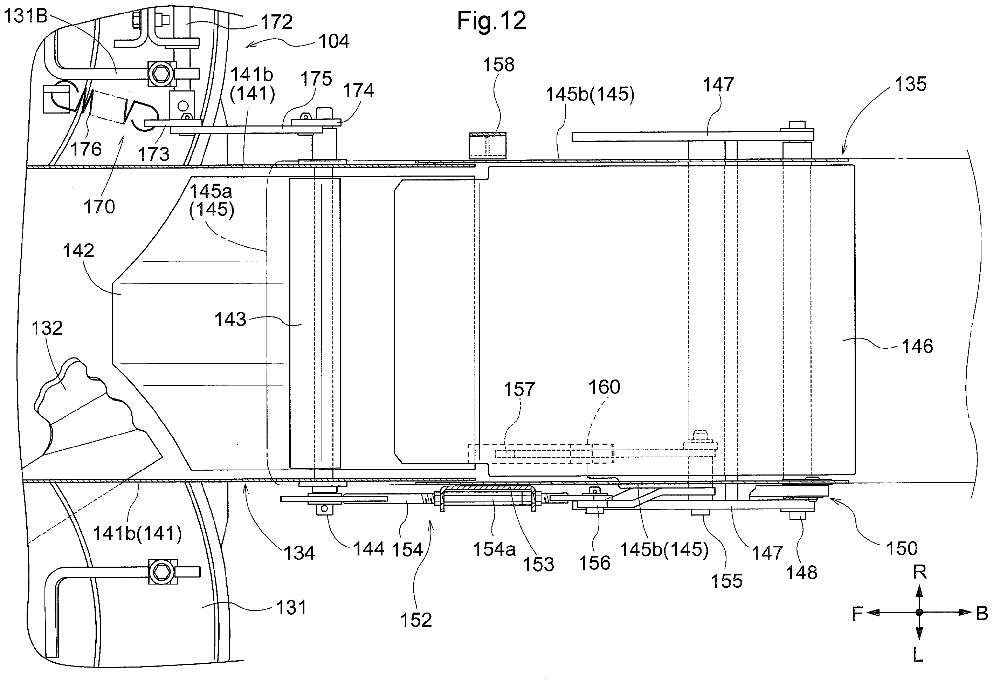

As shown in Figs. 12 to 14, the first linkage mechanism 170 includes, for example: the first operation lever 171 that has a support shaft portion 172 that is orientated in the right-left direction, and is supported on a rear right portion of the cutting blade housing 131 so as to be swingable in a top-bottom direction; a first arm 173 that is fixed to a left end portion of the support shaft portion 172; a second arm 174 that is fixed to a right end portion of the support shaft 144; a push-pull link 175 that links the first arm 173 and the second arm 174 with each other; and a tension spring 176. The first arm 173 is biased so as to swing and be inclined downward in a forward direction due to the effect of the tension spring 176, and the movement of the first arm 173 is restricted by an abutting portion 177, and thus the mower-side bottom plate 142 is held in a guiding orientation in which the mower-side bottom plate 142 is inclined upward in a rearward direction. By operating the first operation lever 171 so as to swing upward in a rearward direction, it is possible to cause the mower-side bottom plate 142 to swing, resisting the biasing force of the tension spring 176, from the guiding orientation in which the mower-side bottom plate 142 is inclined upward in a rearward direction, to an orientation in which the mower-side bottom plate 142 is inclined upward in a forward direction.

If cut grass has blocked the mower-side duct portion 134 by adhering to and being deposited on the mower-side bottom plate 142, the driver can swing the mower-side bottom plate 142 in a top-bottom direction by operating the first operation lever 171 so as to swing in a top-bottom direction, and thereby remove the cut grass adhering to and deposited on the mower-side bottom plate 142, while sitting on the driver's seat 120.

### Container-side Duct Portion

Next, the container-side duct portion 135 for collecting grass will be described.

As shown in Figs. 11 to 14, the container-side duct portion 135 for collecting grass is provided. The container-side duct portion 135 is connected to the mower-side duct portion 134 formed in the cutting blade housing 131, so as to be in communication with the mower-side duct portion 134, and guides cut grass sent out from the mower-side duct portion 134. The container-side duct portion 135 is provided in a space formed between the right and left power transmission cases 114, so as to extend in a front-rear direction.

As shown in Figs. 11 to 14, the container-side duct portion 135 includes a container-side duct body 145 and a container-side bottom plate 146. The container-side duct body 145 includes a top surface 145a and right and left side surfaces 146b, and is formed so as to have an inverted U-shape when seen in a front-rear direction. The container-side bottom plate 146, which has a plate shape, is provided so as to cover a lower portion of the internal space of the container-side duct body 145. Therefore, as in the case of the mower-side duct portion 134 of the mower apparatus 104, a substantially rectangular tube-shaped conveyance path that extends rearward and obliquely upward is formed in the internal space surrounded by container-side duct body 145 and the container-side bottom plate 146.

A duct stopper 158, which serves as a right deformation prevention member that abuts against a portion near a rear lower end portion of the right-side side surface 141b, at which the container-side duct body 145 is connected to the mower-side duct portion 134, from the outside in a width direction, to restrict the orientation of the container-side duct body 145 from changing outward, is provided on the right side of the container-side duct portion 135.

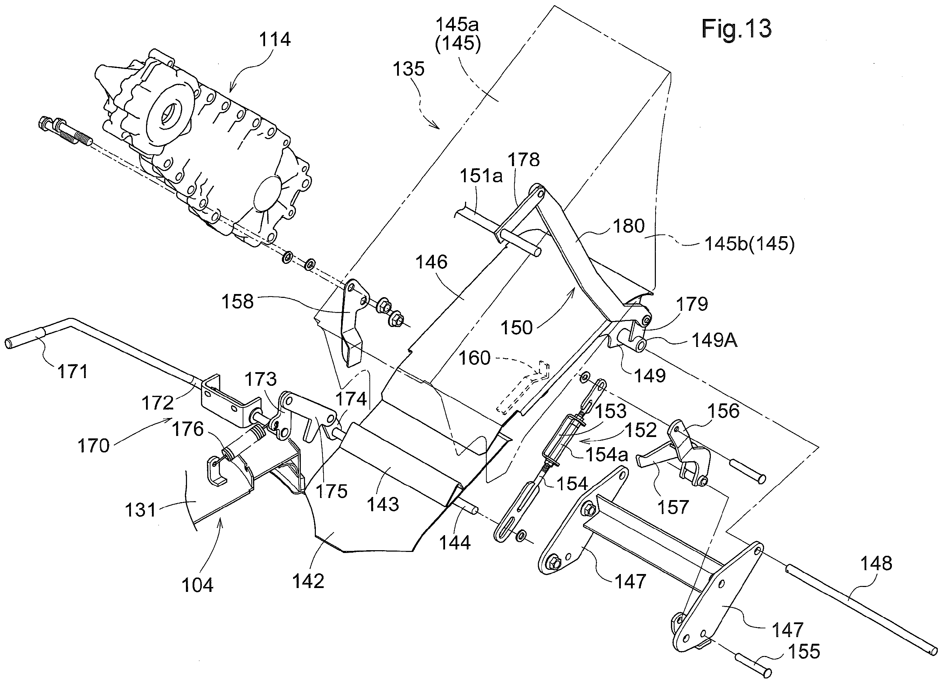

Support members 147 that are at fixed positions are provided on the right and left outer sides of the container-side duct portion 135. Although not shown in the figures, the support members 147 are coupled to the machine body frame 110, the power transmission cases 114, and so on and are supported at fixed positions. The container-side bottom plate 146 of the container-side duct portion 135 is supported by the right and left support members 147 so as to be swingable in a top-bottom direction about a lateral axis. That is to say, as shown in Figs. 12 and 13, a rotating support shaft 148 is provided so as to span between the right and left support members 147. Right and left support arms 149 are connected to the lower surface of the container-side bottom plate 146 integrally therewith so as to extend downward in a rearward direction. Bosses 149A that are provided at the extension ends of the right and left support arms 149 are fitted onto and supported by the rotating support shaft 148 so as to be rotatable relative to the rotating support shaft 148.

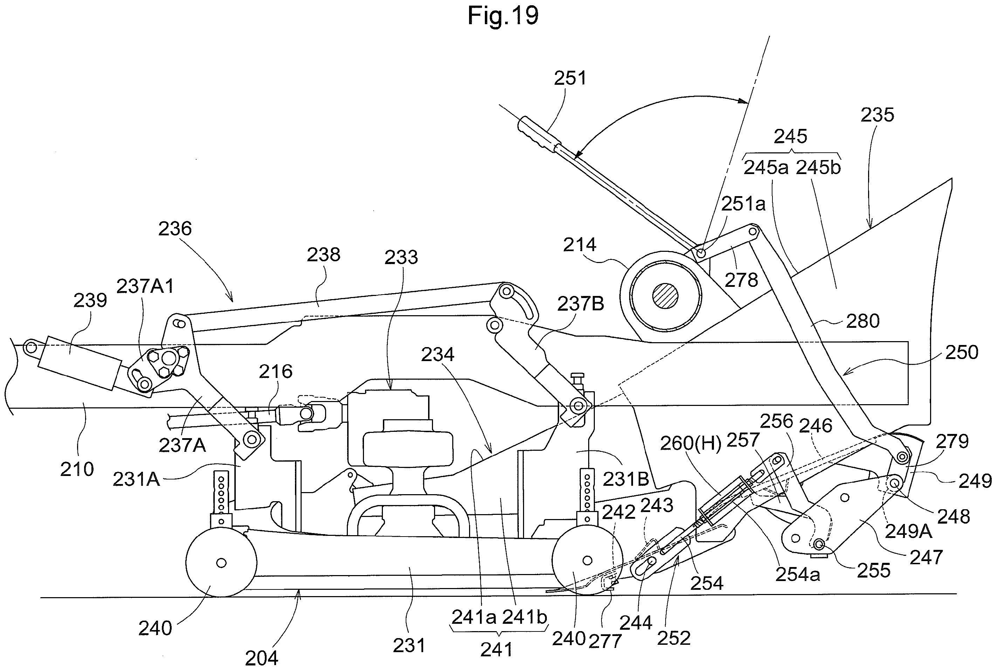

The container-side bottom plate 146 of the container-side duct portion 135 is interlocked by a second linkage mechanism 150 with a second operation lever 151 that is provided on a side of the driver's seat 120, and the container-side bottom plate 146 is configured such that it can be rotated by operating the second operation lever 151. As shown in Figs. 13 and 19, the second operation lever 151 is supported by a lateral shaft portion 151a so as to be rotatable, and a first arm 178 that rotates together with the lateral shaft portion 151a is provided at the left end portion of the lateral shaft portion 151a. The first arm 178 is interlocked and linked by a push-pull link 180 with a second arm 179 that is provided continuous with a rotation boss 149a of a support arm 149. Therefore, upon the second operation lever 151 being operated so as to swing, the container-side bottom plate 146 is caused to swing by the linkage structure of the second linkage mechanism 150. As a result, as with the mower-side bottom plate 142, if cut grass has blocked the container-side duct portion 135 during cutting work, it is possible to clear the block caused by the grass and enable it to be conveyed by operating the second operation lever 151 so as to swing back and forth.

The container-side bottom plate 146 of the container-side duct portion 135 is configured such that its orientation changes in conjunction with the mower apparatus 104 being lifted or lowered, in addition to being configured to change the orientation thereof according to an operation performed using the second operation lever 151. More specifically, as shown in Figs. 11 to 13, a linkage mechanism 152 that interlocks and links the mower apparatus 104 and the container-side bottom plate 146 with each other is provided to change the orientation of the container-side bottom plate 146 in conjunction with the mower apparatus 104 being lifted and lowered. The linkage mechanism 152 is provided so as to be located on the outer left side of the container-side duct portion 135.

### Linkage Mechanism

The linkage mechanism 152 includes: a push-pull link 154 whose one end portion is interlocked and linked with a left end portion of the support shaft 144 that supports the mower-side bottom plate 142; a fulcrum pin 155 that is provided for a support member 147; and a swing arm 156 to which the other end portion of the push-pull link 154 is pivotally coupled and that is supported by the fulcrum pin 155 so as to be swingable. A swingable cam member 157 that is supported by the fulcrum pin 155 so as to be swingable integrally with the swing arm 156, and whose swingable end abuts against the lower surface of the container-side bottom plate 146, is provided so as to be linked with the operation of the linkage mechanism 152. The push-pull link 154 is provided with a turnbuckle portion 154a.

A receiver member 153 that is formed in a substantially U-like shape by bending both end portions of a strip-shaped member in the same direction is attached to the outer side of the turnbuckle portion 154a so as to be integrally coupled with the turnbuckle portion 154a. The receiver member 153 is provided near a left side surface 145b of the container-side duct body 145 with a narrow gap therebetween, which helps prevent the left side surface 145b of the container-side duct body 145 from deforming.

Upon the mower apparatus 104 being lifted, the support shaft 144 is accordingly lifted and pushes the push-pull link 154, and the swing arm 156 and the cam member 157 swing and change the orientation of the container-side bottom plate 146 such that the container-side bottom plate 146 is inclined upward in a forward direction. Upon the mower apparatus 104 being lowered, the support shaft 144 is lowered and pulls the push-pull link 154, and the swing arm 156 and the cam member 157 swing and change the orientation of the container-side bottom plate 146 such that the container-side bottom plate 146 is inclined downward in a forward direction. As a result, it is possible to prevent the container-side bottom plate 146 from being damaged due to the lifting and lowering of the mower apparatus 104 and prevent cut grass from being discharged from a gap between the mower-side bottom plate 142 and the container-side bottom plate 146, for example.

A portion of the push-pull link 154 where it is linked with the support shaft 144 is formed as an elongated hole. Even if the orientation of the support shaft 144 is changed by operating the second operation lever 151, the mower-side bottom plate 142 does not swing in conjunction therewith, and even if the mower-side bottom plate 142 is operated so as to swing, the container-side bottom plate 146 does not swing in conjunction therewith.

### Guide Plate

As shown in Figs. 11 to 14, a guide plate 160 is provided on the lower surface of the container-side bottom plate 146.

This guide plate 160 is formed by bending a strip-shaped member that is elongated in a front-rear direction, so as to have a V shape, and is provided near one end portion of the container-side bottom plate 146 in a right-left direction.

The guide plate 160 is located at a position that overlaps the swing trajectory of the cam member 157 that is provided continuous with the linkage mechanism 152. Therefore, upon the linkage mechanism 152 operating as the mower apparatus 104 is lifted, the support shaft 144 is lifted and presses the push-pull link 154, and the swing arm 156 and the cam member 157 swing and change the orientation of the container-side bottom plate 146 such that the container-side bottom plate 146 is inclined upward in a forward direction.

At this time, if the cam member 157 moves up the guide plate 160, the orientation of the container-side bottom plate 146 is changed so as to be more inclined upward in a forward direction than when the cam member 157 abuts against the lower surface of the container-side bottom plate 146.

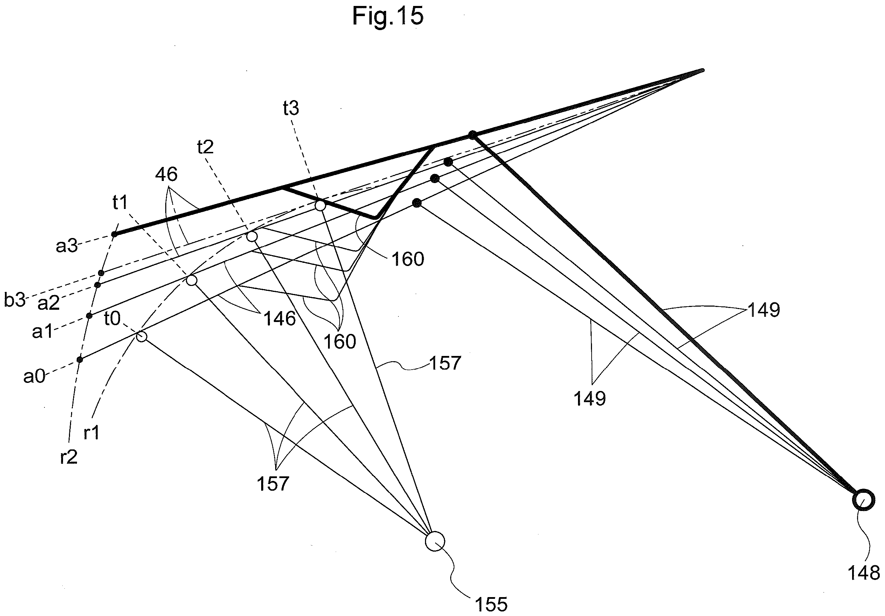

That is to say, as shown in Fig. 15, the container-side bottom plate 146 swings up and down about the axis of the rotating support shaft 148. Here, the front end of the container-side bottom plate 146 travels along a swing trajectory r2.

The cam member 157 swings about the axis of the fulcrum pin 155 in conjunction with the movement of the swing arm 156. The point at which the cam member 157 comes into contact with the lower surface of the container-side bottom plate 146 moves along a swing trajectory r1.

In Fig. 15, the reference numeral 160 indicates the guide plate.

When the contact point at which the cam member 157 comes into contact with the lower surface of the container-side bottom plate 146 is located at t0, the front end of the container-side bottom plate 146 is located at a position a0. At this time, the cam member 157 is in contact with the lower surface of the container-side bottom plate 146, and is not in contact with the guide plate 160.

When the contact point at which the cam member 157 comes into contact with the lower surface of the container-side bottom plate 146 moves to a position t1, the container-side bottom plate 146 is slightly lifted to a position a1. At this time, the cam member 157 is in contact with the lower surface of the container-side bottom plate 146, and is not in contact with the guide plate 160.

When the contact point at which the cam member 157 comes into contact with the lower surface of the container-side bottom plate 146 moves to a position t2, the container-side bottom plate 146 is further lifted to a position a2. At this time, the cam member 157 is in contact with the lower surface of the container-side bottom plate 146, and is located very close to the guide plate 160, but has not come in contact with the guide plate 160 yet.

When the contact point at which the cam member 157 comes into contact with the lower surface of the container-side bottom plate 146 moves to a position t3, the container-side bottom plate 146 is further lifted to a position a3. At this time, the cam member 157 moves up the guide plate 160, and lifts the container-side bottom plate 146 higher than when the guide plate 160 is not present.

An imaginary line b3 shows a state in which the lower surface of the container-side bottom plate 146 is lifted at the same position t3, without the guide plate 160. In this way, if the guide plate 160 is not provided, the position of the contact point of the cam member 157 is almost the same as the position t2. By lifting the container-side bottom plate 146 in a state in which the cam member 157 is in contact with the guide plate 160, it is possible to lift the container-side bottom plate 146 to the position a3.

In this way, the guide plate 160 is used to make it possible to lift the container-side bottom plate 146 in a swing area in which the amount of lift performed by the cam member 157 is insufficient, by an amount that is close to the insufficient amount. As a result, it is possible to change the amount of rise of the front end of the container-side bottom plate 146 so as to match the amount of rise of the mower apparatus 104. Therefore, it is easier to reduce a change in the interval between the mower-side bottom plate 142 and the container-side bottom plate 146, and reduce the amount of grass falling out.

### Variations of Second Embodiment

(1) The above-described embodiment shows a configuration in which the guide plate 160 is formed on only one side end portion of the container-side bottom plate 146 in a right-left direction. However, the present disclosure is not limited to such a configuration. For example, the guide plate 160 may be provided near the midpoint of the container-side bottom plate 146 in a right-left direction, or the guide plate 160 may be formed at both end portions of the container-side bottom plate 146 in a right-left direction. In such cases, the cam member 157 needs to be provided at a position corresponding to the position of the guide plate 160.
   Regarding other configurations, the same configurations as those in the above-described embodiment may be adopted.
(2) In the above-described embodiment, the guide plate 160 is bent downward so as to have a V shape. However, the guide plate 160 is not limited to such a configuration. Any shape may be adopted as appropriate. For example, the guide plate 160 may be formed so as to be a gently curved protrusion.
   Regarding other configurations, the same configurations as those in the above-described embodiment may be adopted.
(3) The above-described embodiment shows a configuration in which the guide plate 160 is formed by welding and fixing a strip-shaped member to the lower surface of the container-side bottom plate 146. However, the guide plate 160 is not limited to such a configuration. For example, the guide plate 160 may be formed integrally with the container-side bottom plate 146, such as forming a portion of the lower surface of the container-side bottom plate 146 so as to bulge downward.
   Regarding other configurations, the same configurations as those in the above-described embodiment may be adopted.
(4) Note that the configuration of the ridable mower machine in each embodiment is applicable to various ridable mower machines ranging from large machines to small machines. Also, configurations of a plurality of embodiments may be combined as appropriate as long as no contradiction occurs.

### THIRD UNCLAIMED EMBODIMENT

### Overall configuration

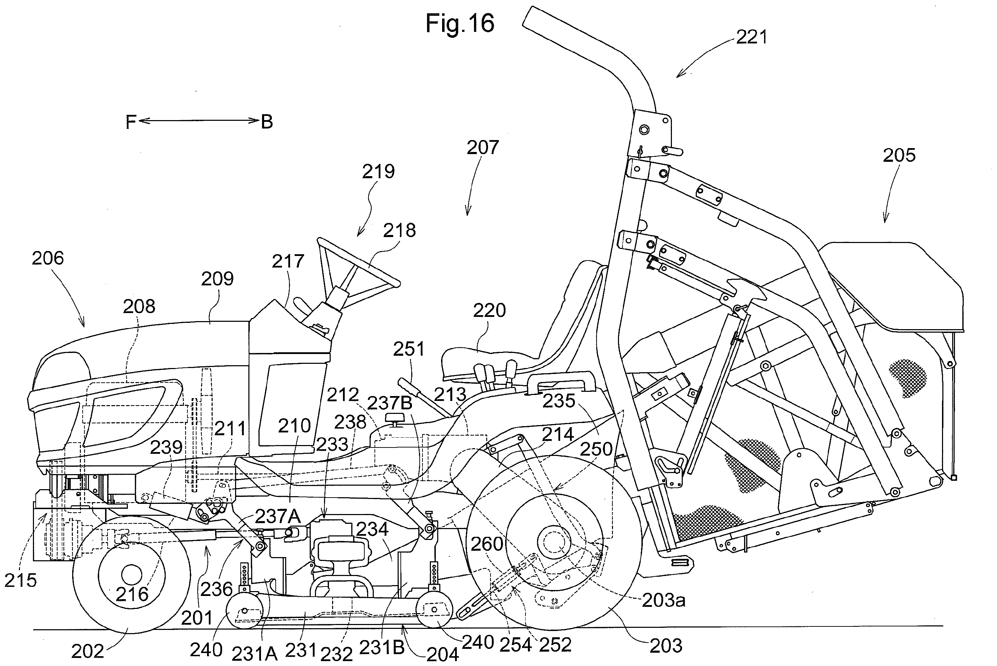

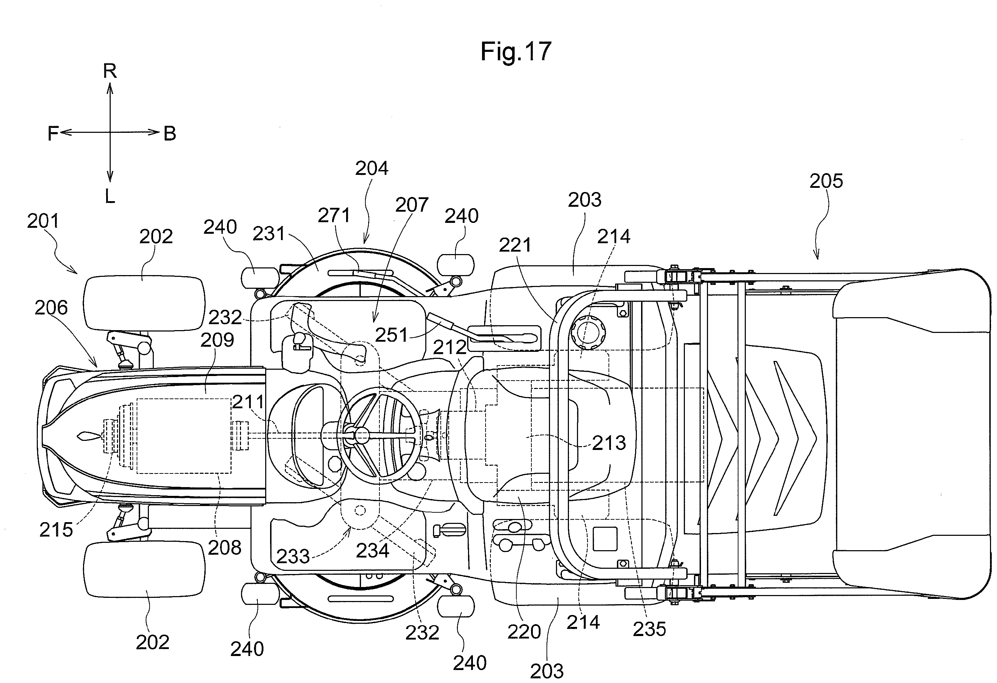

As shown in Figs. 16 and 17, a grass mower has a self-propelled configuration including a pair of right and left steerable front wheels 202 on the front side of a traveling vehicle body 201, and including a pair of right and left drivable rear wheel 203 on the rear side. A rear discharge type of mower 204 is attached by suspension so as to be capable of being raised and lowered, at a location between the front wheels 202 and the rear wheel 203 in the front-rear direction underneath the vehicle body. A grass collecting device 205, which is provided a grass collecting portion that stores grass cut by the mower 204, is arranged on the rear side of the traveling vehicle body 201.

A prime mover section 206 is provided in the front portion of the traveling vehicle body 201, and a boarding driving section 207 is provided behind the prime mover section 206. In the prime mover section 206, an engine 208 is mounted and supported to a vehicle body frame 210 in a state of being enclosed under an engine hood 209. Motive power output from the rear side of the engine 208 is input to a hydrostatic continuously variable transmission device (HST) 212 at a rearward position via a transmission shaft 211 that extends rearward. Output from the hydrostatic continuously variable transmission device 212 passes through a transmission case 213 provided in a rear portion and chain-type transmission mechanisms (not shown) that are included in right and left transmission cases 214, and is then transmitted to right and left rear wheel shafts 203a, thus driving the rear wheel 203. The transmission cases 214 are arranged extending rearward and diagonally downward from lateral side portions of the transmission case 213.

A power takeoff mechanism 215 constituted by a belt transmission mechanism is provided on the front side of the engine 208, and motive power from the engine 208 is transmitted to the mower 204 via a power takeoff (PTO) shaft 216 provided in the power takeoff mechanism 215 and a transmission mechanism 233 provided above the mower 204.

The boarding driving section 207 is provided with a steering panel 217 that is continuous with the rear side of an engine hood 209, a steering portion 219 that includes a steering wheel 218 that enables steering the front wheels 202, and the like. A driver seat 220 is disposed behind the steering portion 219, and a ROPS (rollover protection structure) 221 is provided behind the driver seat 220.

### Abnormality detection device

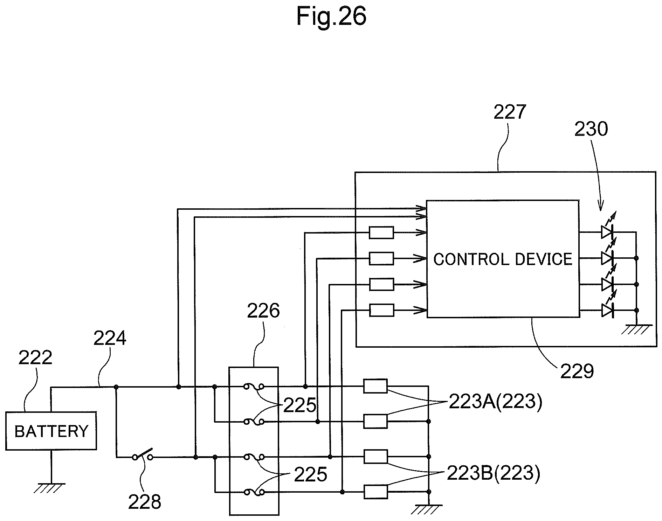

As shown in Fig. 26, the grass mower is provided with a battery 222, and electrical power is supplied to multiple electrical power loads 223. Fuses 225 are individually provided in power supply circuits 224 for supplying power to the electrical power loads 223, thus preventing abnormalities caused by overcurrent. The fuses 225 are collectively accommodated in a fuse box 226. The grass mower includes an abnormality detection device 227 according to which, when one of the fuses 225 breaks during an operation, it is possible to immediately learn which of the fuses 225 melted.

The electrical power loads 223 include an electrical power load 223B that receives power when a key switch 228 is turned on, and an electrical power load 223A that receives power regardless of the on/off state of the key switch 228. Each of the electrical power loads 223 receives electrical power via a fuse 225. A control device 229 is provided for identifying an abnormality, and a plurality of LED (light emitting diode) lamps 230 are provided in one-to-one correspondence with the fuses 225. The control device 229 receives information regarding the power supply circuits 224 at locations upstream and downstream of the fuses 225 in the power supply direction. Based on the information regarding the power supply circuits 224 at upstream and downstream locations, the control device 229 lights the LED lamp 230 that corresponds to the fuse 225 that melted. According to this configuration, a worker can immediately identify which fuse 225 has melted. Note that although four electrical power loads 223 are shown in Fig. 26, there is no limitation to four electrical power loads, and five or more electrical power loads 223 may be provided, and in this configuration as well, a fuse 225 and an LED lamp 230 are provided for each of the electrical power loads 223.

### Mower configuration

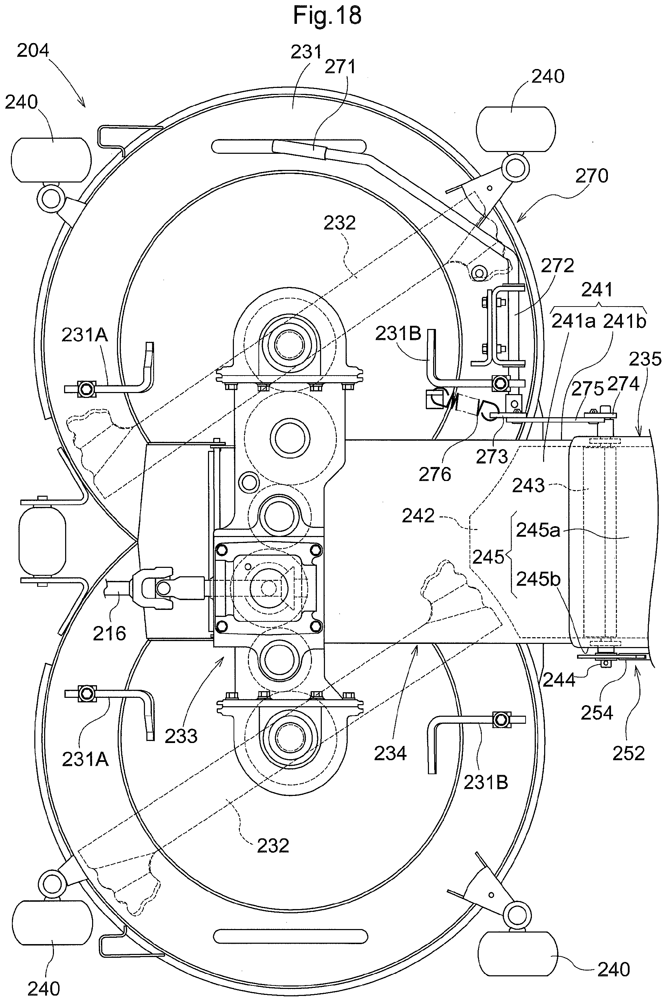

As shown in Fig. 18, the mower 204 has a structure including two blades 232 that are arranged side-by-side in the right-left direction in a mowing blade housing 231, and the left blade 232 is driven to rotate clockwise, whereas the right blade 232 is driven to rotate counter-clockwise. In this way, in this configuration, the blades 232 are driven to rotate in mutually opposite directions. When the left blade 232 is driven to rotate clockwise and the right blade 232 is driven to rotate counter-clockwise, cut grass is carried by conveying wind generated by the rotation of the two blades 232 and is discharged rearward from a discharge portion 234 that is formed in the vicinity of the center of the rear portion of the mowing blade housing 231. The cut grass discharged from the discharge portion 234 is guided by a grass collection duct 235 that is connected to the discharge portion 234, and fed to and stored in the grass collecting container 205.

As shown in Fig. 19, the mower 204 is supported to the vehicle body frame 210 so as to be capable of being raised and lowered via an elevation link mechanism 236. The elevation link mechanism 236 includes one pair of front and rear swing links 237A and 237B on each of the right and left sides, and the upper end sides of the swing links are pivotably coupled to the vehicle body frame 210, whereas the lower end sides are pivotably coupled to the mowing blade housing 231.

A pair of right and left vertical extension portions 231A and 231B, which extend upward from the upper surface of the mowing blade housing 231, are provided upright on the upper portion of the mowing blade housing 231 at both locations on the front portion side and locations on the rear portion side. As shown in Fig. 18, the vertical extension portion 231A on the front portion side and the vertical extension portion 231B on the rear portion side are each constituted by a plate body that is bent into an "L" shape in a plan view, and are integrally coupled to the upper surface of the mowing blade housing 231 by welding.

The front swing link 237A has one end that is coupled to the vehicle body frame 210 of the traveling vehicle body 201 so as to be capable of swinging about a lateral axis, and has another end that is coupled to the upper portion of the vertical extension portion 231A on the front portion side so as to be capable of swinging about a lateral axis. The rear swing link 237B has one end that is coupled to the vehicle body frame 210 of the traveling vehicle body 201 so as to be capable of swinging about a lateral axis, and has another end that is coupled to the upper portion of the vertical extension portion 231B on the rear portion side so as to be capable of swinging about a lateral axis.

Upper end sides of the front swing link 237A and the rear swing link 237B are interlockingly coupled by a coupling rod 238, and a first end portion of an elevation hydraulic cylinder 239 is pivotably coupled to an operation portion 237A1 formed in the front swing link 237A. A second end portion of the hydraulic cylinder 239 is pivotably coupled to the vehicle body frame 210. When the hydraulic cylinder 239 extends and retracts, the swing links 237A and 237B also extend and retract, thus raising and lowering the mower 204. When mowing is performed, gauge wheels 240 provided on the lower end portion of the mowing blade housing 231 come into contact with the ground, and thus the mower 204 follows the ground while performing mowing.

As shown in Figs. 18, 19 and 20, the discharge portion 234 is formed so as to extend rearward and diagonally upward from the rear portion of the mowing blade housing 231 in the center in the right-left direction. The discharge portion 234 includes a discharge portion main body 241 that is integrally coupled to the mowing blade housing 231, and a guide member 242 that forms the bottom portion of the discharge portion main body 241. The discharge portion main body 241 has a ceiling surface 241a and right and left side surfaces 241b, and is shaped as an inverted "U" in a view along the front-rear direction. Also, the plate-shaped guide member 242 is provided so as to cover the lower side of an interior space formed by the discharge portion main body 241. Accordingly, the discharge portion main body 241 and the guide member 242 form an approximately rectangular tube-shaped conveying passage that extends rearward and diagonally upward. An upward guiding surface 243 that guides cut grass upward is formed at an intermediate point along the conveying path of the guide member 242.

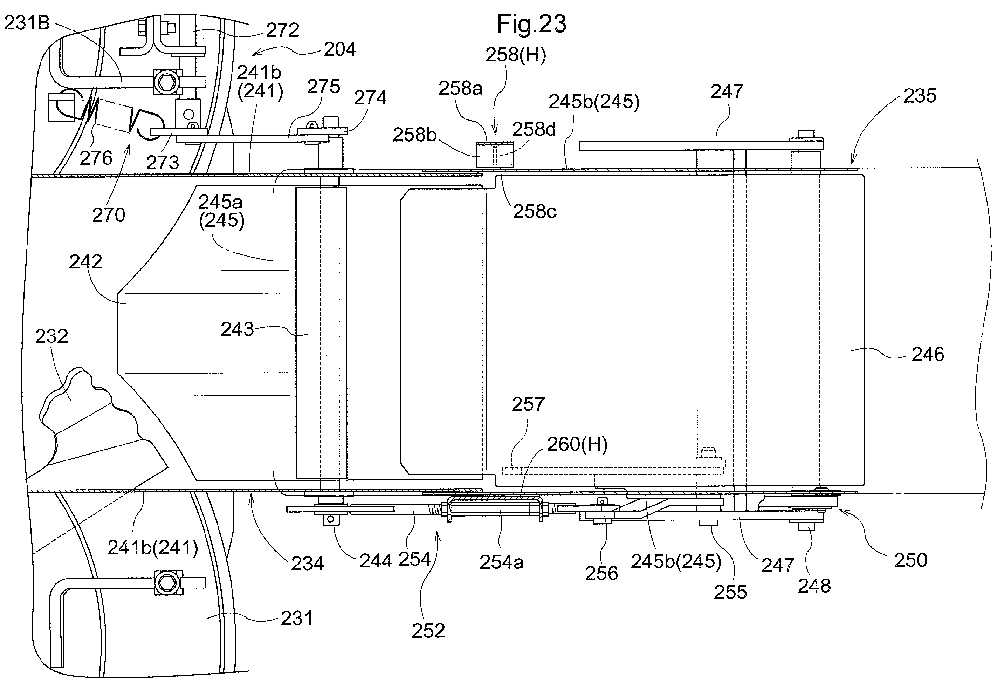

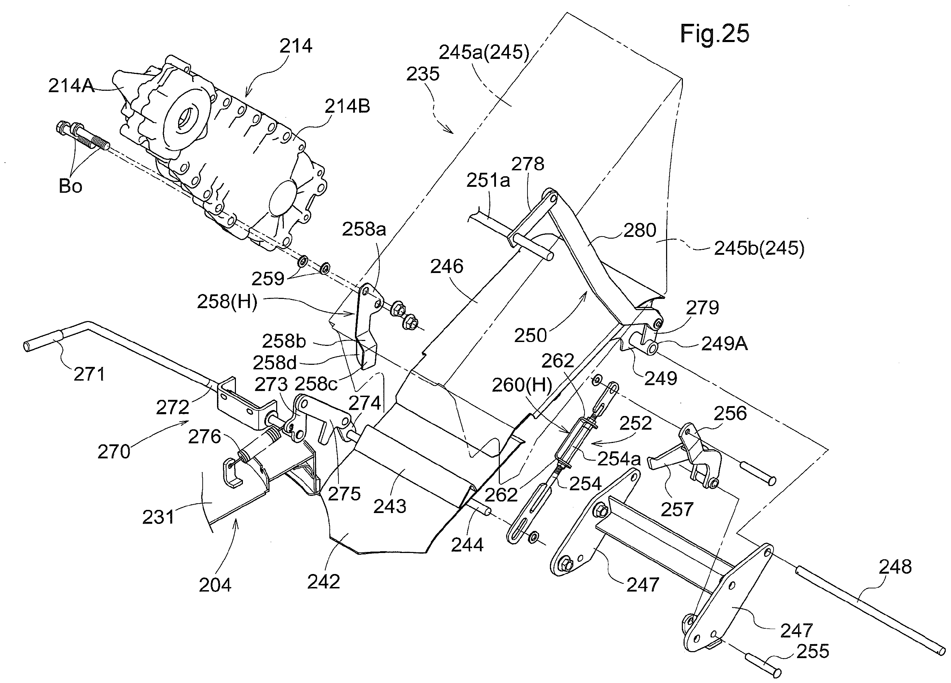

As shown in Figs. 23 and 25, the guide member 242 is supported by a pivot shaft 244 that extends between the right and left side surfaces 241b of the discharge portion main body 241, so as to be capable of pivoting upward and downward relative to the mowing blade housing 231. The guide member 242 is linked to a first operation lever 271 that is provided in the vicinity of the driver seat 220 via a first linking mechanism 270, and the guide member 242 is configured to be capable of being swung by manually operating the first operation lever 271. If the discharge portion 234 becomes clogged with cut grass during mowing, the cut grass clog can be loosened and conveyed by swinging the first operation lever 271 upward and downward.

As shown in Figs. 18, 20 and 23, the first linking mechanism 270 includes the first operation lever 271 that has a pivot shaft portion 272 extending in the right-left direction and can swing upward and downward in the right-side rear portion of the mowing blade housing 231, a first arm 273 that is fixed to a left end portion of the pivot shaft portion 272, a second arm 274 that is fixed to a right end portion of the pivot shaft 244, a push-pull link 275 and a tension spring 276 that are linked to the first arm 273 and the second arm 274, and the like. Due to the action of the tension spring 276, the first arm 273 is biased so as to swing diagonally forward while also being restricted by an abutting portion 277, thus holding the guide member 242 in a backward inclined guiding orientation. When the first operation lever 271 is pulled and swung backward and upward, the guide member 242 can be swung against the biasing force of the tension spring 276 in the forward and upward direction from the backward inclined guiding orientation.

During mowing, if cut grass becomes affixed to the guide member 242 and accumulates so as to cause a clog in the discharge portion 234, the operator can, while sitting in the driver seat 220, swing the guide member 242 in the up-down direction by swinging the first operation lever 271 in the up-down direction, thus eliminating the affixed and accumulated cut grass.

### Grass collection duct

### Next, the grass collection duct 235 will be described.

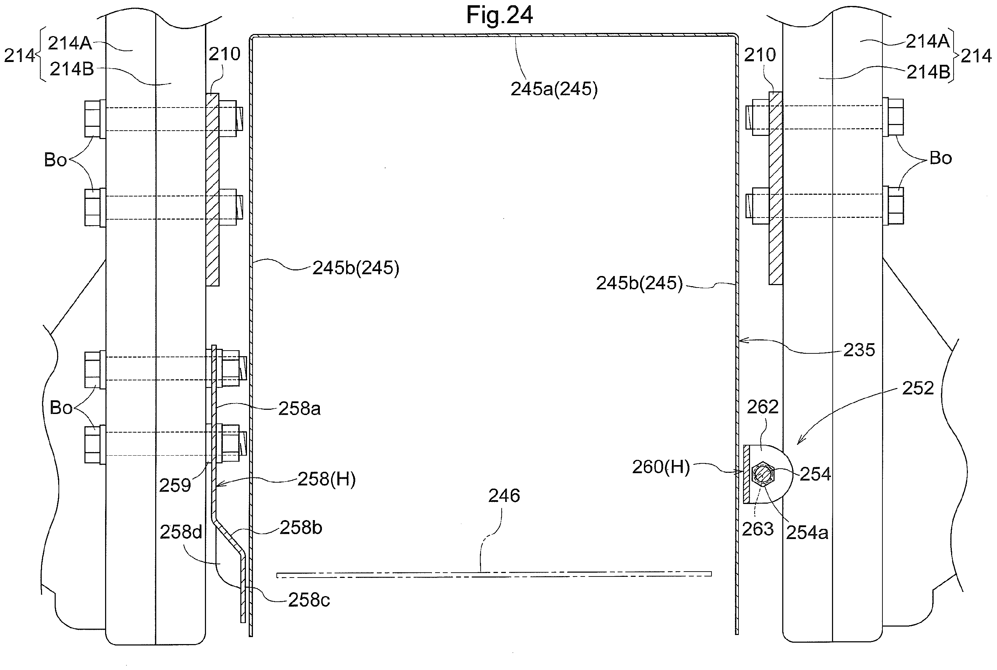

As shown in Figs. 18, 19, 20 and 23, the grass collection duct 235 is connected to and in communication with the discharge portion 234 formed in the mowing blade housing 231, and guides cut grass that is fed from the discharge portion 234. As shown in Figs. 16 and 24, the duct 235 is provided so as to extend in the front-rear direction in a space formed between the right and left transmission cases 214.

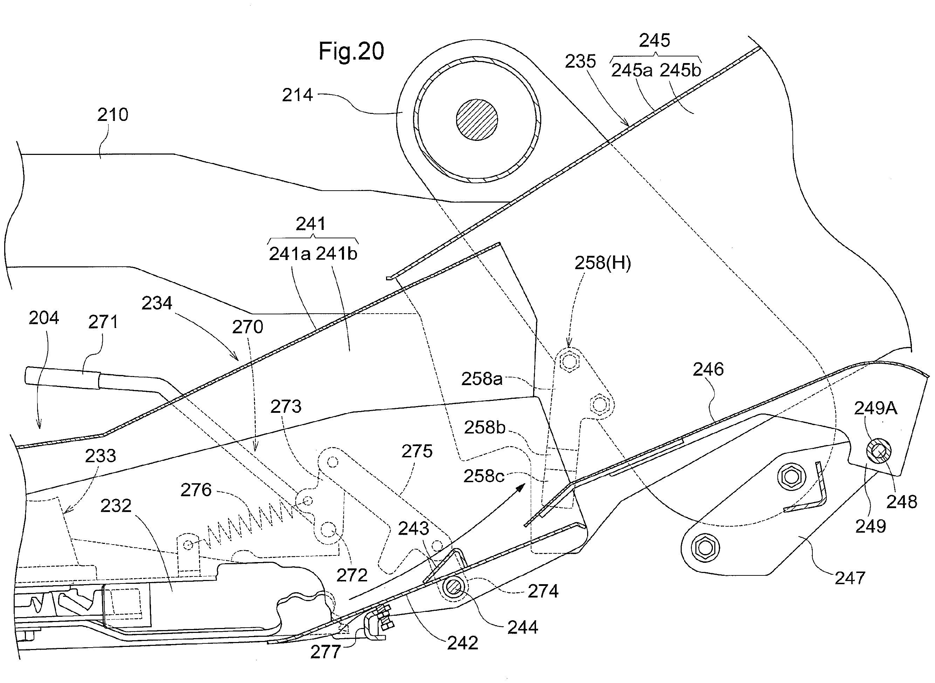

As shown in Figs. 20, 23 and 24, the duct 235 includes a duct main body 245 and a bottom plate 246. The duct main body 245 has a ceiling surface 245a and right and left side surfaces 245b, and is shaped as an inverted "U" in a view along the front-rear direction. Also, the plate-shaped bottom plate 246 is provided so as to cover the lower side of an interior space formed by the duct main body 245. Accordingly, similarly to the discharge portion 234 of the mower 204, an approximately rectangular tube-shaped conveying passage that extends rearward and diagonally upward is formed in an interior region that is enclosed by the duct main body 245 and the bottom plate 246.

Support members 247 are provided at fixed positions on the right and left outer sides of the duct 235. Although not shown, the support members 247 are supported at the fixed positions by being coupled to the vehicle body frame 210, the transmission cases 214, and the like. The bottom plate 246 of the duct 235 is supported by the right and left support members 247 so as to be capable of swinging upward and downward about a lateral axis. Specifically, as shown in Figs. 20, 23 and 25, a pivot shaft 248 is provided extending between the right and left support members 247. Right and left support arms 249 are integrally coupled to the lower surface of the bottom plate 246 and extend backward and downward therefrom. Boss portions 249A are respectively provided on extending end portions of the right and left support arms 249, and are rotatably fitted around and supported to the pivot shaft 248.

The bottom plate 246 of the duct 235 is interlockingly coupled to a second operation lever 251, which is provided on one lateral side of the driver seat 220, via a second linking mechanism 250, and is configured to be rotated by operation of the second operation lever 251. As shown in Figs. 19 and 25, the second operation lever 251 is rotatably supported by a lateral shaft portion 251a, and a first arm 278 is provided so as to integrally rotate with the left end portion of the lateral shaft portion 251a. The second operation lever 251 is interlockingly linked to the second arm 279, which is coupled to the rotation boss portion 249a of the support arm 249, via a push-pull link 280. Accordingly, when the second operation lever 251 is swung, the bottom plate 246 also swings due to the interlocking structure of the second linking mechanism 250. As a result, similarly to the guide member 242, if the duct 235 becomes clogged with cut grass during mowing, the cut grass clog can be loosened and conveyed by swinging the second operation lever 251 upward and downward.

The bottom plate 246 of the duct 235 is configured so as to be able to change orientation in coordination with elevation of the mower 204 separately from the switch in orientation performed by operation of the second operation lever 251. Specifically, as shown in Figs. 19 and 25, a mower linking mechanism 252 that interlockingly links the mower 204 and the bottom plate 246 is provided so as to change the orientation of the bottom plate 246 in coordination with elevation of the mower 204. The mower linking mechanism 252 is provided at a position on the left outer side of the duct 235.

The mower linking mechanism 252 includes a push-pull link 254 having one end that is interlockingly linked to the left end portion of the pivot shaft 244 that supports the guide member 242, a pivot pin 255 provided in the support member 247, a first swing arm 256 that is pivotably connected to the other end portion of the push-pull link 254 and is swingably supported by the pivot pin 255, and a second swing arm 257 that is supported by the pivot pin 255 so as to be capable of swinging integrally with the first swing arm 256 and that has a swing end that abuts against the lower surface of the bottom plate 246. The push-pull link 254 includes a turn buckle portion 254a.

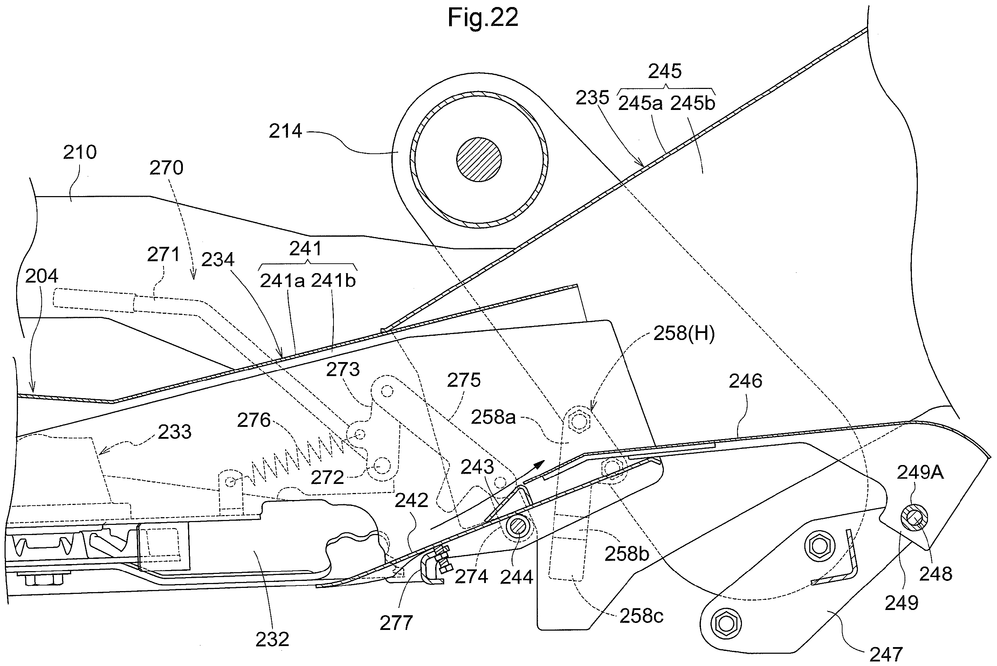

When the mower 204 is raised, the pivot shaft 244 is also raised and pushes the push-pull link 254, and thus the first swing arm 256 and the second swing arm 257 swing to change to an orientation in which front end of the bottom plate 246 rises (see Fig. 22). When the mower 204 is lowered, the pivot shaft 244 is also lowered and pulls the push-pull link 254, and thus the first swing arm 256 and the second swing arm 257 swing to change to an orientation in which front end of the bottom plate 246 descends (see Fig. 20). As a result, it is possible to prevent cases where the raising/lowering of the mower 204 causes damage to the bottom plate 246, causes cut grass to be discharged through a gap between the guide member 242 and the bottom plate 246, and the like.

The portion of the push-pull link 254 that is linked to the pivot shaft 244 is formed as an elongated hole, and even if an orientation switch is performed by operating the second operation lever 251, the guide member 242 does not swing in coordination, and even if the guide member 242 is swing, the bottom plate 246 does not swing in coordination.

### Deformation prevention member

As shown in Figs. 20, 23, 24 and 25, a duct stopper 258 is provided on the right side of the duct 235 and serves as a right-side deformation prevention member H that suppresses an outward change in orientation of the duct main body 245 by abutting against, from the laterally outward side, the duct main body 245 at the location of connection to the discharge portion 234 in the vicinity of the rear lower end portion of the right side surface 241b. As shown in Figs. 24 and 25, the duct stopper 258 is formed by a plate body that is bent so as to be approximately Z-shaped, and includes an upper attachment plate portion 258a, an intermediate portion 258b that is continuous with the lower portion of the attachment plate portion 258a and extends diagonally outward and downward, and an abutting portion 258c that is continuous with the lower portion of the intermediate portion 258b and extends along the right side surface of the duct main body 245. Also, a reinforcing rib 258d is integrally provided extending between the outer surface of the intermediate portion 258b and the outer surface of the abutting portion 258c.

The duct stopper 258 is provided in a manner in which the attachment plate portion 258a is coupled to the transmission case 214, and the abutting portion 258c abuts against or is in the vicinity of the right side surface 245b of the duct main body 245. The transmission case 214 is configured with a two-piece structure including two divided case portions 214A and 214B that are flange-coupled in order to facilitate the assembly of the chain-type transmission mechanism and the like. As shown in Fig. 24, the right and left divided case portions 214A and 214B are arranged such that flange portions formed at the division surfaces abut against each other, and are then coupled using a plurality of bolts Bo.

The attachment plate portion 258a of the duct stopper 258 is also fastened together by taking advantage of the flange coupling bolts Bo of the transmission case 214. Washers 259 are arranged between the duct stopper 258 and the transmission case 214 such that the abutting portion 258c is pressed against the right side surface 245b of the duct 235.

As shown in Figs. 23, 24 and 25, a U-shaped receiving member 260 is provided on the left side of the duct 235 and serves as a left-side deformation prevention member H that suppresses an outward change in orientation of the duct main body 245 by abutting against, from the laterally outward side, the duct main body 245 at the location of connection to the discharge portion 234 in the vicinity of the rear lower end portion of the left side surface 245b.

As described above, the mower linking mechanism 252 is provided on the left side of the duct 235. As shown in Figs. 23 and 25, the receiving member 260 is provided so as to be fixed to the push-pull link 254 of the mower linking mechanism 252. The receiving member 260 is constituted by an elongated plate-shaped member that includes bent portions 262 that are bent in the same direction at two end portions in the lengthwise direction, and has an approximately U-shaped structure overall. The push-pull link 254 is passed through insertion holes 263 (see Fig. 24) that are formed in the two bent portions 262, and the receiving member 260 is attached in a state of being integrally coupled to the outer side of the turn buckle portion 254a. The receiving member 260 is provided in the vicinity of the left side surface 245b of the duct main body 245. A slight gap is formed between the receiving member 260 and the side surface 245b so as to avoid interference with the side plate when the bottom plate 246 swings.

With the above configuration, an outward change in the orientation of the duct main body 245 can be suppressed by the duct stopper 258 abutting against the right side of the duct 235. An outward change in the orientation of the duct main body 245 can be suppressed by the receiving member 260 abutting against the left side of the duct 235.

### Variations of third embodiment

### (1) Variation of mower linking mechanism

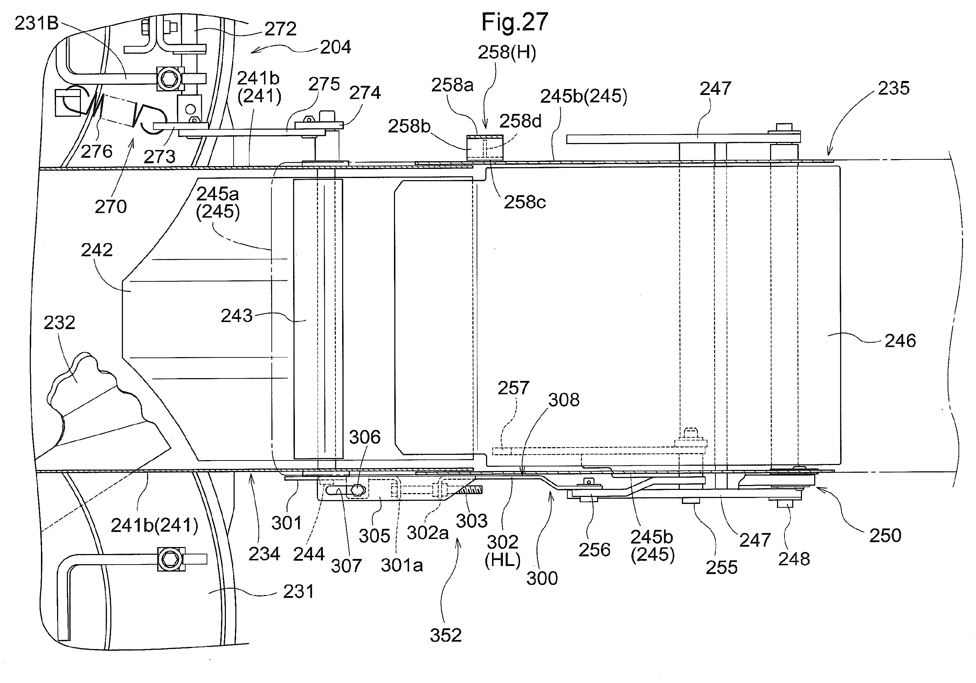

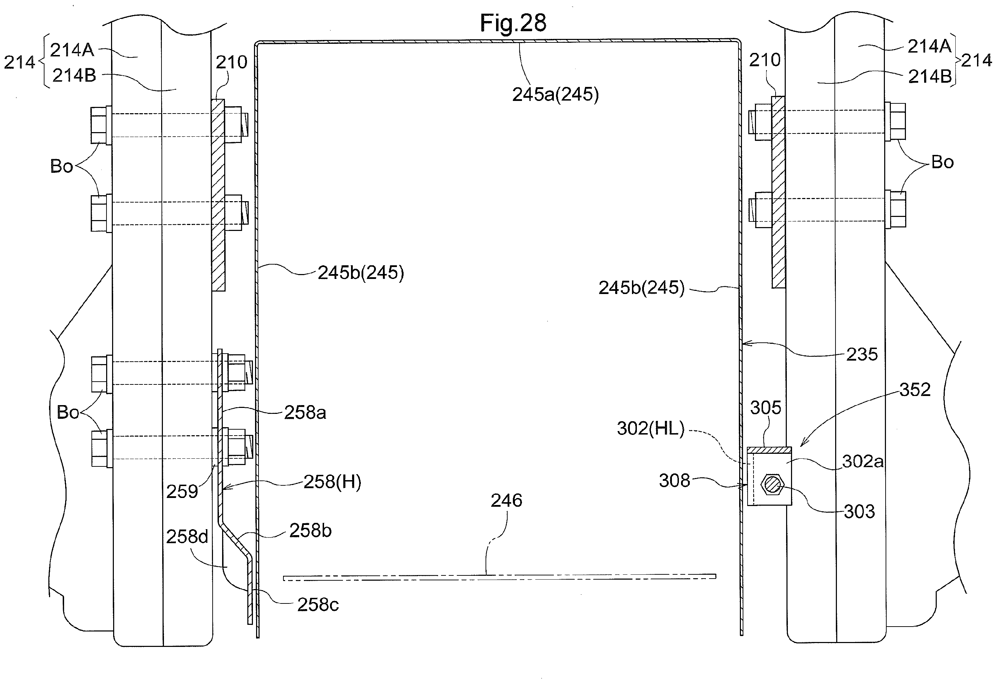

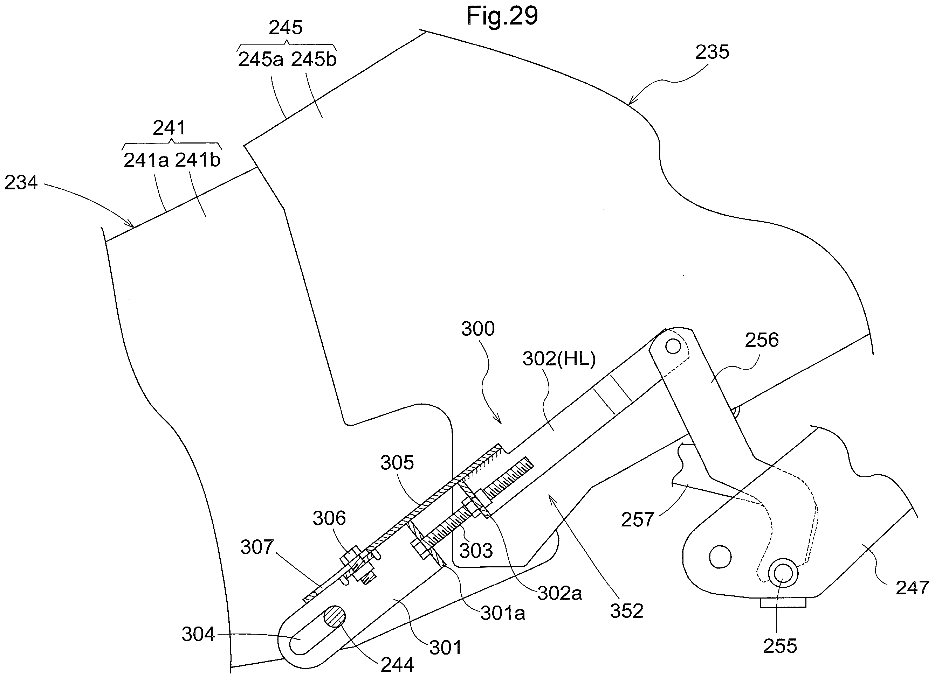

As shown in Figs. 27, 28 and 29, a mower linking mechanism 352 according to one variation includes a first swing arm 256, a second swing arm 257, and a linking member 300 that is configured to link a free end of the first swing arm 256 to a left end portion of a pivot shaft 244 of a guide member 242. The linking member 300 includes: a front link portion 301 having a front end portion thereof connected to the pivot shaft 244; a rear link portion 302 having a rear end portion thereof connected to the free end of the first swing arm 256; and an intermediate link portion 303 connected to a front end portion 302a of the rear link portion 302 and a rear end portion 301a of the front link portion 301. The front link portion 301 is connected to the pivot shaft 244 through an elongated slot 304 that is formed in the front link portion 301, while the pivot shaft 244 being slidably engaged within the slot 304. Whereby, even when the bottom plate 246 is swung by the second operation lever 251, the guide member 242 will not swing in association therewith; and even when the guide member 242 is swung by the first operation lever 271, the bottom plate 246 will not swing in association therewith. The intermediate link portion 303 comprises a screw shaft that is configured to change in connection position of the intermediate link portion 303 with the rear link portion 302. In response to change in connection position of the intermediate link portion 303 with the rear link portion 302, the linking member 300 may be changed in its length. A reinforcement member 305 is connected between and across the front link portion 301 and the rear link portion 302. The reinforcement member 305 is connected to the rear link portion 302 by welding. The reinforcement member 305 is connected to the front link portion 301 by a connecting bolt 306. A bolt hole 307, formed in the reinforcement member 305 to be engaged with the connecting bolt 306, comprises an elongated slot that allows adjustment of length of the linking member 300 by the intermediate link portion 303. Each of the front link portion 301, the rear link portion 302 and the reinforcement member 305 is formed of a plate-like member.

### (2) Variation of deformation prevention member

As shown in Figs. 27, 28 and 29, a deformation prevention member HL according to another variation is provided by the rear link portion 302. The rear link portion 302 is formed of a plate-like member. The deformation prevention member HL includes a support surface 308 extending along a lateral side of the duct 235. The deformation prevention member HL is configured to prevent change in orientation of the duct 235 by contact with the duct 235 on the support surface 308.
(3) In the above embodiment, the duct stopper 258, which serves as a deformation prevention member on the right side of the duct 235, is fastened together with the transmission case 214 using the flange coupling bolts Bo of the transmission case 214 that serves as the vehicle body-side fixing portion. As an alternative to the configuration, for example, a configuration is possible in which the duct stopper 258 is coupled to the transmission case 214 using dedicated fasteners that are provided separately, or another configuration is possible in which the duct stopper 258 is coupled to the vehicle body frame 210 as the vehicle body-side fixing portion instead of the transmission case 214. Also, instead of the deformation prevention member being provided in the vehicle body-side fixing portion, various configurations can be employed, such as a configuration in which the deformation prevention member extends around the lower side of the duct 235 and positionally holds and couples together the right and left side surfaces of the duct main body 245.
(4) Although the receiving member 260, which serves as the deformation prevention member on the left side of the duct 235, is provided in the push-pull link 254 in the configuration of the above embodiment. Alternatively, the receiving member 260 may be coupled to the transmission case 214 similarly to the duct stopper 258, or may be coupled to the vehicle body frame 210.

### FOURTH EMBODIMENT

### Overall Configuration

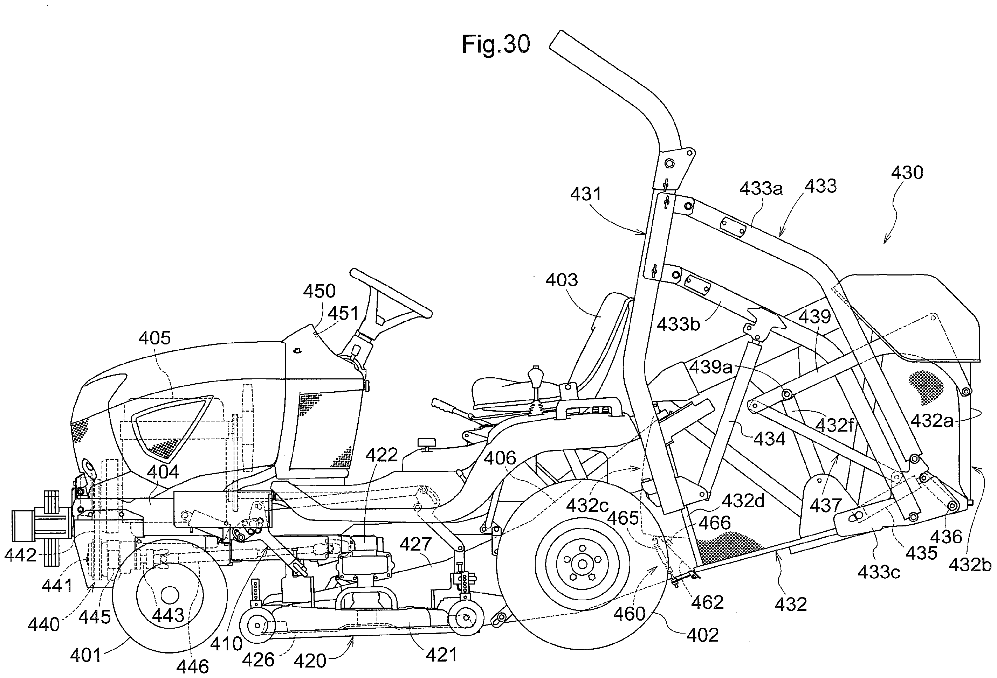

Fig. 30 is an overall side view of a mower machine. As shown in this figure, the mower machine is configured to be self-propelled, using a pair of right and left front wheels 401 and a pair of right and left drivable rear wheels 402. Also, the mower machine is provided with a self-propelled vehicle that has a driver part that is equipped with a driver's seat 403 that is provided in a rear portion of the vehicle body. Furthermore, the mower machine is provided with a mower apparatus 420 that is coupled to a position between the front and rear wheels of a vehicle body frame 404 of the self-propelled vehicle, using a linkage mechanism 410, and the mower machine is also provided with a cut grass collecting apparatus 430 that is provided with a grass collecting container 432 that is supported by a support frame 431 on a rear portion of the vehicle body frame 404 of the self-propelled vehicle. The mower apparatus 420 is lifted and lowered by the linkage mechanism 410 so as to be in a lowered working state and a lifted non-working state.

The mower machine performs mowing work to mow lawns and grass. Specifically, the self-propelled vehicle is provided with an engine 405 in a front portion of the vehicle body, and a power take-off mechanism 440 below the engine 405. The power take-off mechanism 440 inputs output power from the engine 405 to an input shaft 441 via a power transmission belt 442, transmits the driving force of the input shaft 441 to a power take-off shaft 443 via a hydraulic working clutch 445, and transmits the drive force of the power take-off shaft 443 to a cutting blade drive mechanism 422 of the mower apparatus 420 via a rotation shaft 446 that is a PTO shaft or the like.

The mower apparatus 420 is provided with two cutting blades 426 that are arranged next to each other in a lateral direction in a cutting blade housing 421. The cutting blades 426 are driven by the cutting blade drive mechanism 422, and rotate about an axis that is orientated in a top-bottom direction, to perform cutting. Cut grass is conveyed by wind generated through the rotation of the cutting blades 426, and is discharged from a cut grass discharging duct 427 that is located above the cutting blade housing 421.

The cut grass discharged from the cut grass discharging duct 427 is sent to the grass collecting container 432 due to the conveyance effect of wind from the cutting blades 426 and the guiding effect of a conveyance duct 406 that is provided in the self-propelled vehicle so as to pass between the pair of right and left rear wheels 402 in a front-rear direction of the vehicle body, and such grass is collected and stored in the grass collecting container 432.

As shown in Fig. 30, in the cut grass collecting apparatus 430, an upper end portion of the support frame 431 and a rear end portion of the grass collecting container 432 are coupled to each other by a linkage mechanism 433 that includes: a pair of upper and lower up/down links 433a and 433b that extend from the left side and the right side of the support frame 431 in a rearward direction of the vehicle body so as to be swingable in a top-bottom direction; and a container supporting member 433c that is coupled to free end portions of the up/down links 433a and 433b. The cut grass collecting apparatus 430 is provided with up/down cylinders 434 that are provided on two sides of the grass collecting container 432, and one dump cylinder 435 that is provided below a rear portion of the grass collecting container 432.

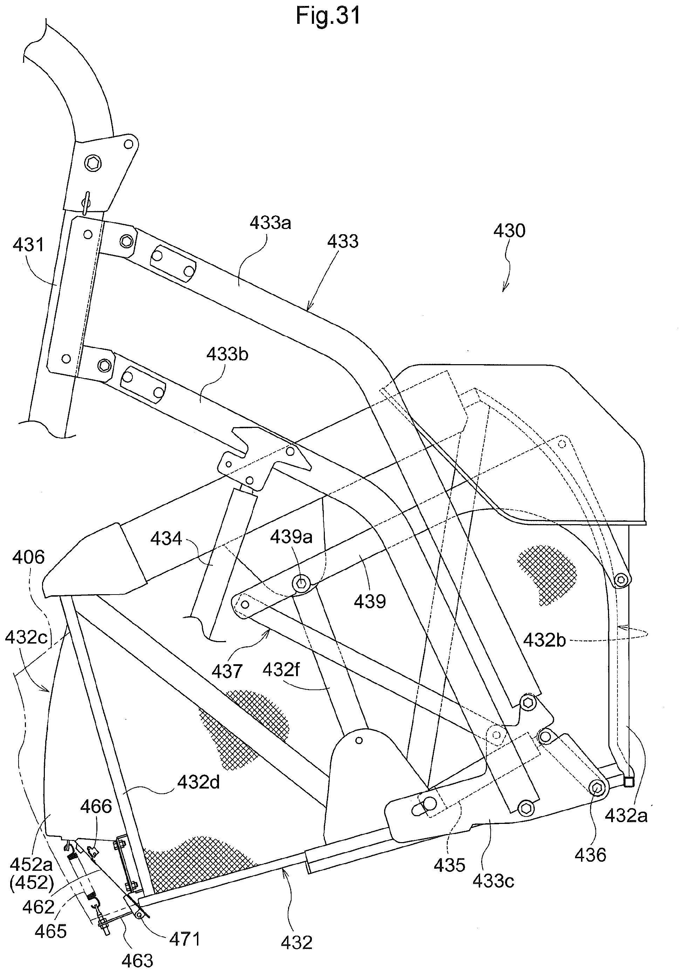

Fig. 31 is a side view of the grass collecting container 432 in a lowered collecting state. As shown in this figure, the cut grass collecting apparatus 430 lowers the linkage mechanism 433, using the pair of right and left up/down cylinders 434, and lowers the grass collecting container 432 so as to swing about the axis of a rotation support shaft 436, using the dump cylinder 435, and thus the grass collecting container 432 is operated so as to enter a lowered collecting state.

In a lowered collecting state, a cut grass input port 432c that is provided in a front portion of the grass collecting container 432 faces forward of the vehicle body and comes into communication with the conveyance duct 406, and cut grass guided in the conveyance duct 406 is input to the grass collecting container 432 through the cut grass input port 432c. An open/close link 437 that includes a support arm 439 and a container frame 432f is provided in a rear portion of the grass collecting container 432. The support arm 439 and the container frame 432f are coupled to each other by a coupling pin 439a, and a lid 432a for a cut grass discharge port 432b is supported by the support arm 439. The support arm 439 is operated so as to swing about the axis of the coupling pin 439a toward the closing side, and thus the lid 432a is operated so as to close. As a result, the cut grass discharge port 432b is closed, and conveyance wind that has flowed into the grass collecting container 432 together with cut grass flows out from the grass collecting container 432 through mesh in a wall of the grass collecting container 432. In such a sate, the grass collecting container 432 collects and stores cut grass from the conveyance duct 406.

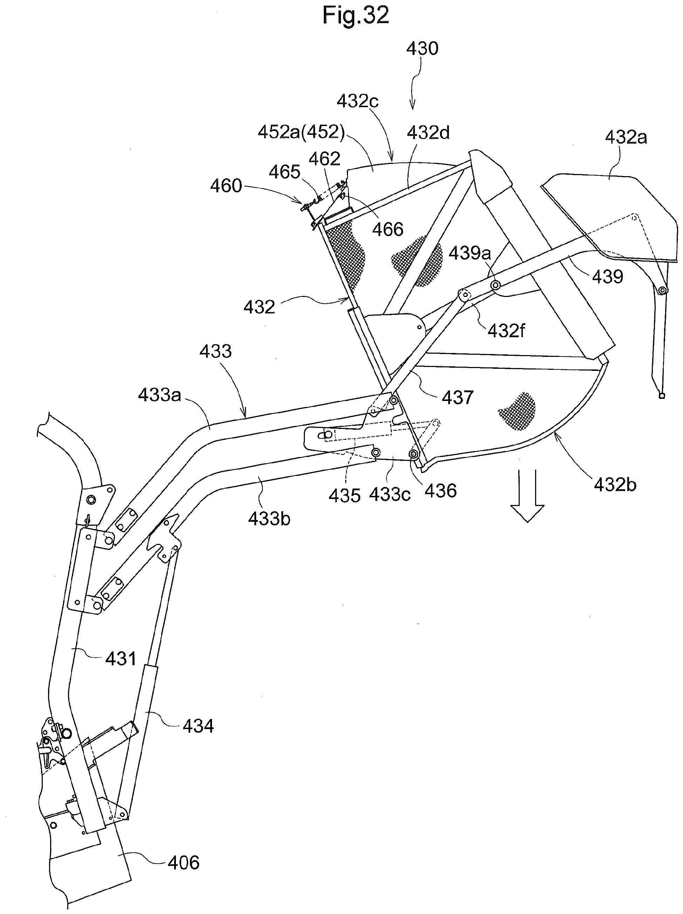

Fig. 32 is a side view of the grass collecting container 432 in a lifted discharging state. As shown in this figure, the cut grass collecting apparatus 430 lifts the linkage mechanism 433, using the pair of right and left up/down cylinders 434, rotates the grass collecting container 432 upward about the axis of the rotation support shaft 436, using the dump cylinder 435, and thus the grass collecting container 432 is operated so as to be in the lifted discharging state.

In the lifted discharging state, the cut grass input port 432c of the grass collecting container 432 faces upward relative to the vehicle body, and the cut grass discharge port 432b faces downward relative to the vehicle body. The open/close link 437 swings about the rotation support shaft 436 of the grass collecting container 432, and accordingly the support arm 439 swings to the opening side, and thus the lid 432a is operated so as to open and the cut grass discharge port 432b opens. In such a state, the grass collecting container 432 discharges the stored cut grass from the cut grass discharge port 432b using free fall.

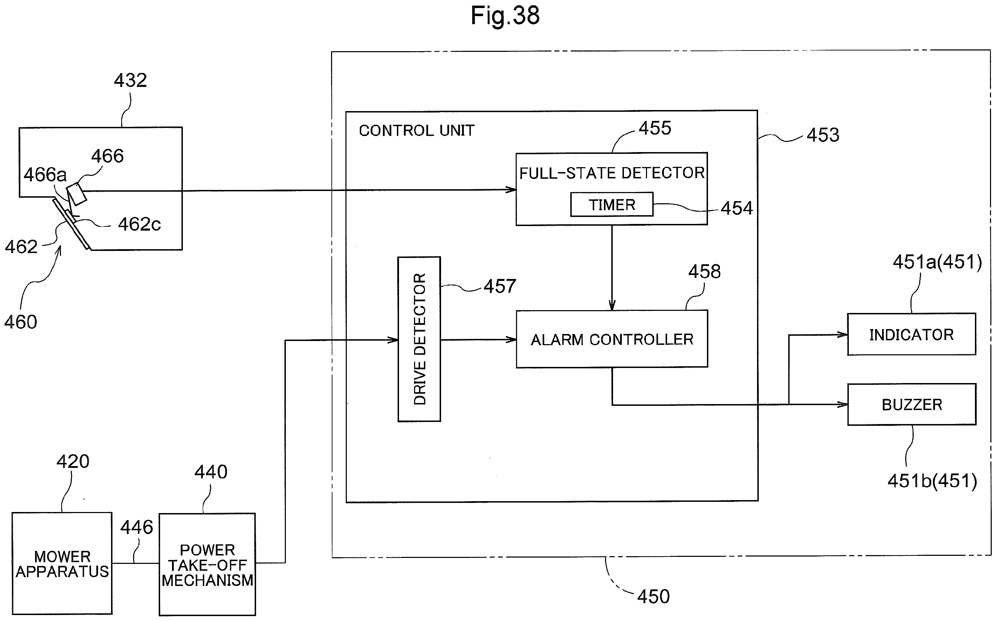

As shown in Fig. 30, the self-propelled vehicle includes a full-state alarm apparatus (an example of a notification unit) 451 that is provided in an operation panel 450. Upon the full state of the grass collecting container 432 being detected by a cut grass amount detection apparatus (an example of a cut grass amount detection unit) 460 that is provided in a front portion of the grass collecting container 432, the full-state alarm apparatus 451 is operated based on the detected information. As described below, the full-state alarm apparatus 451 includes an indicator 451a (see Fig. 38), a buzzer 451b (see Fig. 38), and so on, and issues a warning (an alarm) indicating that the grass collecting container 432 is full, by lighting the indicator 451a (see Fig. 38) or sounding the buzzer 451b.

### Cut grass Amount Detection Apparatus

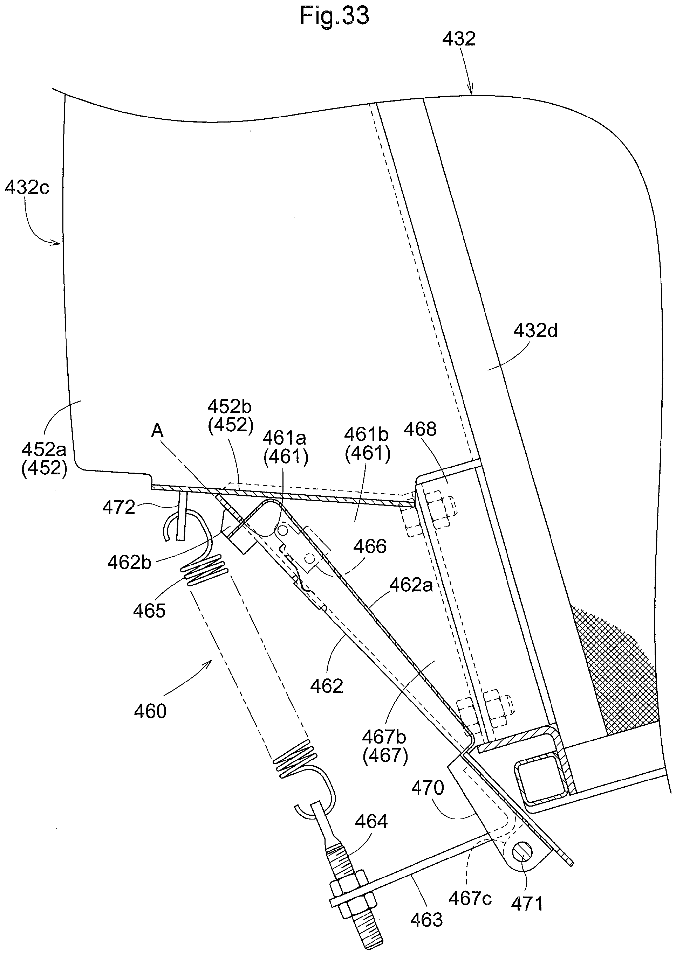

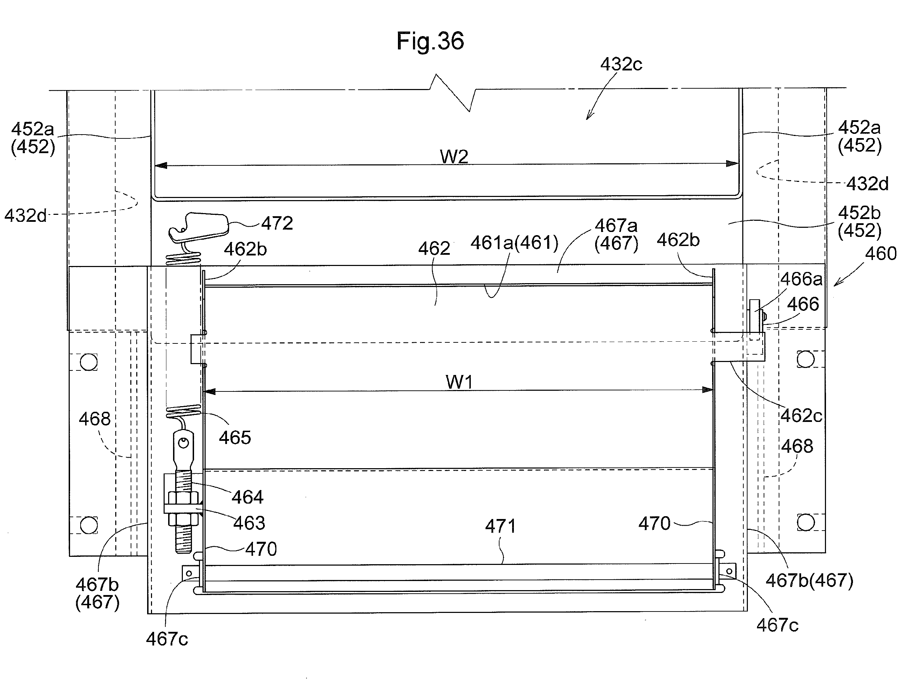

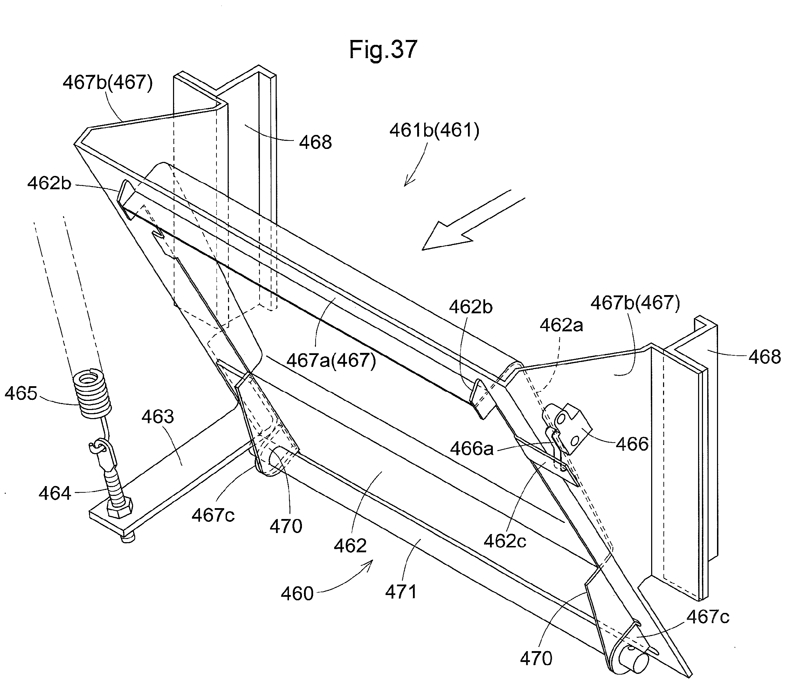

Fig. 33 is a vertical cross-sectional view of a portion of the grass collecting container 432 in which the cut grass amount detection apparatus 460 is provided. Fig. 36 is a front view of the portion of the grass collecting container 432 in which the cut grass amount detection apparatus 460 is provided. Fig. 37 is a perspective view of the cut grass amount detection apparatus 460. As shown in these figures, the cut grass input port 432c of the grass collecting container 432 is formed by a pair of right and left lateral plates 452a and a bottom plate 452b of a sheet metal member 452 that is attached so as to span a pair of right and left front container frames 432d of the grass collecting container 432.

The cut grass amount detection apparatus 460 includes: a detection hole 461 that is provided in a front portion of the grass collecting container 432 below the cut grass input port 432c; a sensor plate 462 that is located on the sensor arrangement port-side of the detection hole 461; a bent sheet metal 467; a spring 465; and a detection means 466. A spring coupling arm 463 is provided at a lower end of a lateral end portion of the sensor plate 462. The spring 465 is coupled to one end of the spring coupling arm 463 using an adjustment screw-type coupling part 464. The sensor plate 462 includes a switch operation portion 462c and a pressure sensitive portion 462a that comes into contact with cut grass in the grass collecting container.

The bent sheet metal 467 includes a pair of right and left lateral plates 467b and a front plate 467a that is continuous with front end portions of the pair of right and left lateral plates 467b and is provided below the sheet metal member 452. The bent sheet metal 467 is supported by the grass collecting container 432, using coupling members 468 that couple the lateral plates 467b and the front container frames 432d to each other on the right and left side.

The sensor plate 462 is supported by a pair of right and left supporting portions 467c, using a pivot shaft 471 that is attached to a pair of right and left coupling plates 470 that are provided on a lower end side of the sensor plate 462 and the pair of right and left supporting portions 467c that are provided at a lower end of the bent sheet metal 467, and the sensor plate 462 rotates about the axis of the pivot shaft 471 that extends in a lateral direction of the grass collecting container. The pressure sensitive portion 462a of the sensor plate 462 comes into contact with cut grass in the grass collecting container, and the weight of the cut grass stored in the grass collecting container 432 is applied to the sensor plate 462.

An end portion of the spring 465 opposite to the end portion that is coupled to the spring coupling arm 463 is coupled to a spring hook 472 that is provided on the bottom plate 452b of the sheet metal member 452. The spring 465 biases the spring coupling arm 463 so as to swing upward about the axis of the pivot shaft 471, with the spring hook 472 serving as a reaction force member, and thus the spring 465 biases the sensor plate 462 so as to swing to a reference orientation A, in which a pair of right and left positioning pieces 462b that are located on the upper end of the sensor plate 462 abut against, and are received and supported by, the front plate 467a of the bent sheet metal 467.

Upon the amount of cut grass in the grass collecting container 432 reaching a preset full amount, the spring 465 expands due to the weight of the cut grass affecting it via the sensor plate 462, and allows the sensor plate 462 to swing outward of the grass collecting container from the reference orientation A so that the swing angle of the sensor plate 462 relative to the reference orientation A will be a preset full-state swing angle.

The detection means 466 is fixed to the lateral plates 467b of the bent sheet metal 467, and is provided with an operation piece 466a that detects that the grass collecting container 432 has entered a full state upon the sensor plate 462 entering a non-contact state, as described below. As described below, the operation piece 466a detects whether or not the grass collecting container 432 is full based on the state of contact between the sensor plate 462 and the switch operation portion 462c.

The detection hole 461 is constituted by a sensor arrangement port 461a that is a rectangular through hole provided in the front plate 467a of the bent sheet metal 467, and a detection hole body 461b that extends from the sensor arrangement portion 461a to the pair of right and left front container frames 432d. The detection hole body 461b is defined by the right and left lateral plates 467b of the bent sheet metal 467, the bottom plate 452b of the sheet metal member 452, and the pair of right and left coupling members 468. The detection hole 461 allows the pressure sensitive portion 462a that bulges from the rear surface of the sensor plate 462 to enter therein.

A dimension W1 of the detection hole 461 in the lateral direction of the grass collecting container is close to a dimension W2 of the cut grass input port 432c of the grass collecting container 432 in the lateral direction of the grass collecting container. The dimension W1 of the detection hole 461 in the lateral direction of the grass collecting container may be set to be the same as the dimension W2 of the cut grass input port 432c of the grass collecting container 432 in the lateral direction of the grass collecting container. Even in this case, as in the case in which the dimension W1 of the detection hole 461 is close to the dimension W2 of the cut grass input port 432c, the area of the sensor plate 462 that comes into contact with cut grass is large, and the sensor plate 462 is more likely to be accurately affected by the weight of cut grass.

Both in the case in which the sensor plate 462 is in the reference orientation A and in the case in which the sensor plate 462 has swung to the preset full-state swing angle, the sensor plate 462 is kept in an attachment orientation in which the pressure sensitive portion 462a is in the detection hole body 461b of the detection hole 461, and a gap from which cut grass may fall out is not formed between the sensor arrangement port 461a of the detection hole 461 and the sensor plate 462.

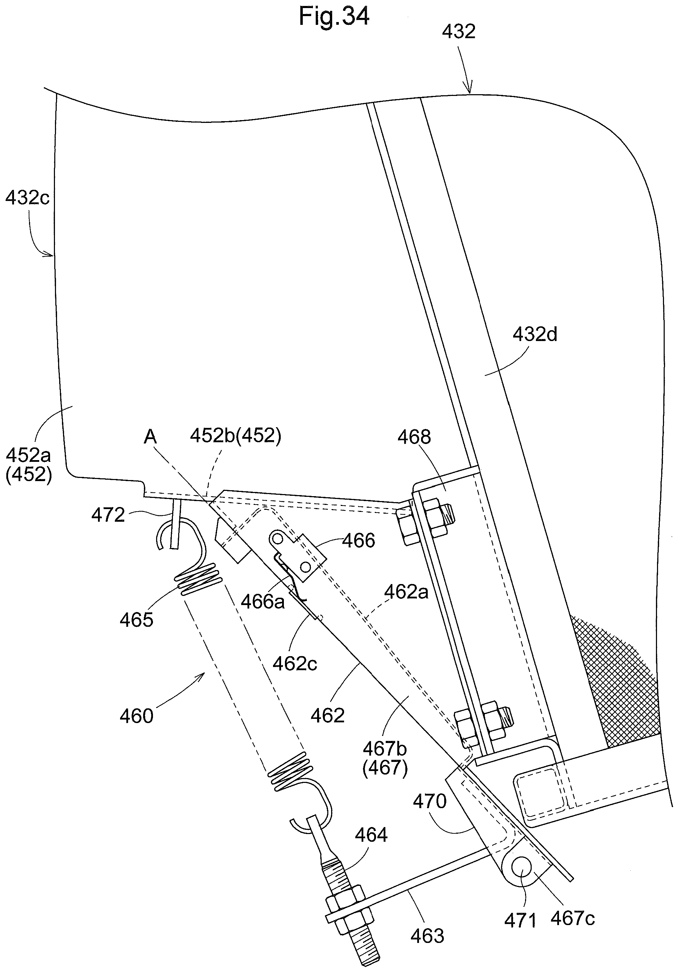

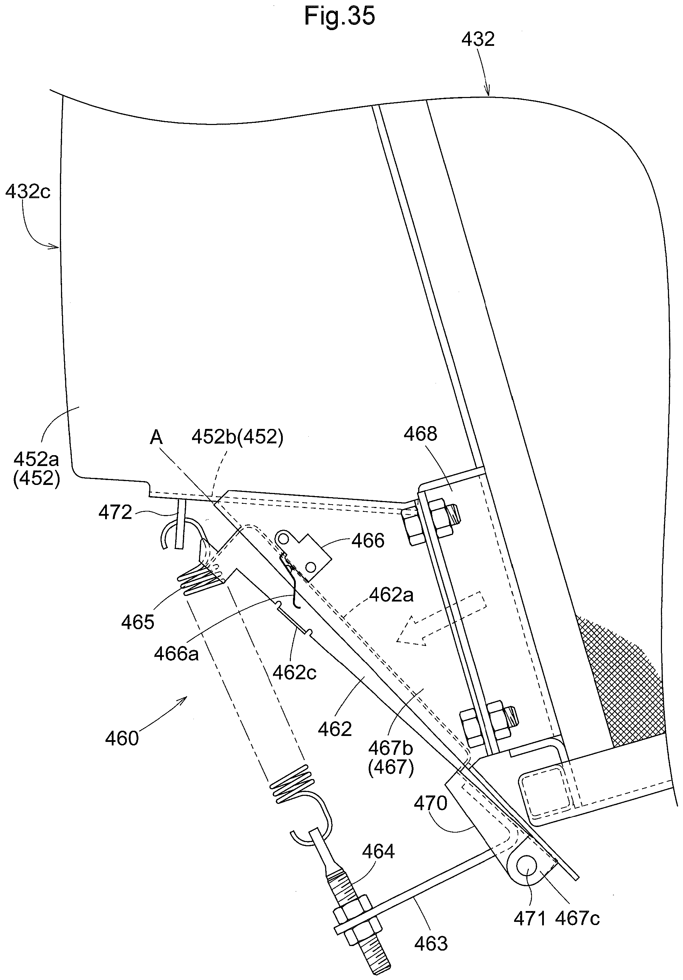

Fig. 34 is a side view of the cut grass amount detection apparatus 460 in a non-detection state. Fig. 35 is a side view of the cut grass amount detection apparatus 460 in a full-state detection state. As shown in these figures, when the sensor plate 462 is in the reference orientation A, the switch operation portion 462c provided on the sensor plate 462 presses the operation piece 466a and the detection means 466 enters an OFF state. On the other hand, upon the swing angle of the sensor plate 462 relative to the reference orientation A reaching the preset full-state swing angle, the operation piece 466a is released from the state of being pressed by the switch operation portion 462c, and the detection means 466 switches to an ON state due to the self-resilience force of the operation piece 466a.

That is to say, as shown in Fig. 34, when no cut grass is stored in the grass collecting container 432, no weight is applied to the sensor plate 462, and the sensor plate 462 is in the reference orientation A. As shown in Fig. 35, upon cut grass being collected to the grass collecting container 432, the cut grass enters the detection hole 461 and comes into contact with the pressure sensitive portion 462a of the sensor plate 462, and the weight of the cut grass is applied to the sensor plate 462. Upon the weight of cut grass being applied to the sensor plate 462, the sensor plate 462 swings from the reference orientation A resisting the spring 465. As the amount of cut grass increases, the weight of the cut grass increases, and the swing angle of the sensor plate 462 increases. Until the swing angle of the sensor plate 462 reaches the preset full-state swing angle, the detection means 466 is pressed by the sensor plate 462 and is in OFF state, and when the swing angle of the sensor plate 462 reaches the preset full-state swing angle, the sensor plate 462 moves away from the detection means 466 and the detection means 466 switches to the ON state. In this way, upon the swing angle of the sensor plate 462 relative to the reference orientation A reaching the preset full-state swing angle, the cut grass amount detection apparatus 460 detects that the amount of cut grass stored in the grass collecting container 432 has reached the full state, and converts this detection result into an electrical signal and outputs it.

### Cut grass Full-state Detection Apparatus

Next, with reference to Figs. 38 to 40, a configuration of a cut grass full-state detection apparatus that detects that the grass collecting container 432 is full of cut grass, and issues an alarm will be described. The cut grass full-state detection apparatus includes a control unit 453 and the full-state alarm apparatus 451, and is provided in the operation panel 450.

As shown in Fig. 38, the control unit 453 acquires information from the cut grass amount detection apparatus 460 and the power take-off mechanism 440, and issues an alarm indicating that the grass collecting container 432 is full, using an indicator (a first notification unit) 451a, which is a full-state alarm apparatus 451, and a buzzer (a second notification unit) 451b, which is a full-state alarm apparatus 451. The indicator 451a turns on a lamp under the control of the control unit 453. The buzzer 451b emits an alarm sound under the control of the control unit 453.

The control unit 453 includes a processor such as a microcomputer, and includes a full-state detector 455, a drive detector 457, and an alarm controller 458.

The full-state detector 455 receives an electrical signal that is output by the cut grass amount detection apparatus 460 when the cut grass amount detection apparatus 460 detects that the amount of cut grass stored in the grass collecting container 432 is the full amount. The full-state detector 455 includes a timer 454. Upon receiving an electrical signal, the timer 454 measures the time period that has elapsed from when the timer 454 received the electrical signal. The full-state detector 455 transmits the measured time to the alarm controller 458 to notify the alarm controller 458 of the fact that the cut grass amount detection apparatus 460 has detected that the grass collecting container 432 is full, and the duration of the full state that has been detected by the cut grass amount detection apparatus 460.

The drive detector 457 receives a signal that indicates whether or not the mower apparatus 420 is being driven. Here, the mower apparatus 420 is driven by a drive force that has been taken off by the power take-off mechanism 440 and has been transmitted to the mower apparatus 420 via the rotation shaft 446. Therefore, whether or not the mower apparatus 420 is being driven can be determined based on whether or not the power take-off mechanism 440 is in operation and transmitting a drive force to the rotation shaft 446. Therefore, while the power take-off mechanism 440 is in operation and transmitting a drive force to the rotation shaft 446, the power take-off mechanism 440 outputs a signal indicating such to the drive detector 457. Upon receiving this signal, the drive detector 457 transmits a signal indicating that the mower apparatus 420 is in operation (is being driven) to the alarm controller 458.

The alarm controller 458 receives, from the full-state detector 455, the duration of the full state that has been detected by the cut grass amount detection apparatus 460 as measured time. The alarm controller 458 also receives a signal indicating that the mower apparatus 420 is in operation. Furthermore, while receiving the measured time, the alarm controller 458 controls the operations of the indicator 451a and the buzzer 451b based on the operation state of the mower apparatus 420.

The cut grass full-state detection apparatus with such a configuration uses the alarm controller 458 of the control unit 453 to control the operations of the full-state alarm apparatus 451 including the indicator 451a and the buzzer 451b, based on the duration of the full state of the grass collecting container 432 and the operation state (the driving state) of the mower apparatus 420.

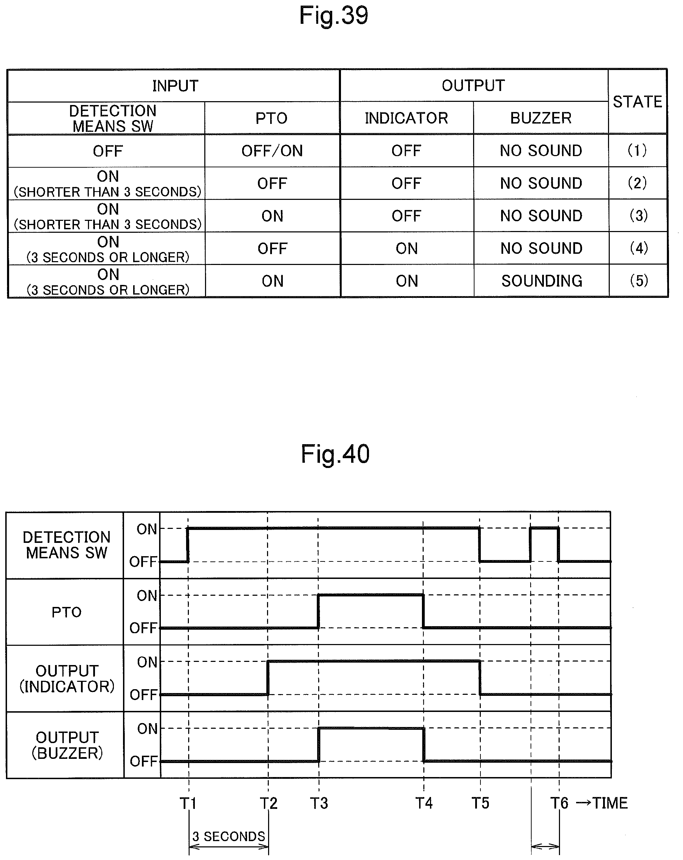

Specifically, as shown in Fig. 39 (see Fig. 38 also), if the cut grass amount detection apparatus 460 does not detect the full state (detection means SW = OFF), the alarm controller 458 turns off the indicator 451a, and brings the buzzer 451b into a non-sounding state (State (1)). Even if the cut grass amount detection apparatus 460 has detected the full state (detection means SW = ON), the alarm controller 458 keeps the indicator 451a off and the buzzer 451b in the non-sounding state until the cut grass amount detection apparatus 460 continuously detects the full state for a predetermined period of time, e.g. three seconds, regardless of whether the mower apparatus 420 is in operation (is not driven: PTO = OFF (a state in which the rotation shaft 446 corresponding to the PTO shaft is not rotating)) (State (2)) or the mower apparatus 420 is in operation (is being driven: PTO = ON (a state in which the rotation shaft 446 corresponding to the PTO shaft is rotating)) (State (3)). If the cut grass amount detection apparatus 460 continuously detects the full state for three seconds, the alarm controller 458 turns on the indicator 451a. At this time, if the mower apparatus 420 is not in operation, the alarm controller 458 does not sound the buzzer 451b (State (4)), and sounds the buzzer 451b only when the mower apparatus 420 is in operation (State (5)).

### Description of Time Chart shown in Fig. 40

An example of a time chart showing such control will be described with reference to Figs. 38 and 40.

The indicator 451a is kept off and the buzzer 451b is kept in the non-sounding state until the cut grass amount detection apparatus 460 detects a full state. At time T1, upon the cut grass amount detection apparatus 460 detecting a full state, the timer 454 of the full-state detector 455 starts time measurement. Note that if the full state becomes undetectable during the time measurement, the timer 454 stops the time measurement and resets the time under the control of the full-state detector 455 (time T6). If the cut grass amount detection apparatus 460 has continuously detected the full state for three seconds at time T2, the indicator 451a is turned on in response to a request from the alarm controller 458. If the mower apparatus 420 is not in operation at time T2, the buzzer 451b is not sounded. Thereafter, at time T3, if the cut grass amount detection apparatus 460 is continuously detecting the full state and the mower apparatus 420 is in operation, the buzzer 451b is sounded in response to a request from the alarm controller 458. If the mower apparatus 420 stops operating at time T4, the buzzer 451b stops sounding in response to a request from the alarm controller 458. At this time, if the cut grass amount detection apparatus 460 is continuously detecting the full state, the indicator 451a is kept on. Although not shown in the drawing, the buzzer 451b also stops sounding if the cut grass amount detection apparatus 460 stops detecting the full state. Thereafter, if the cut grass amount detection apparatus 460 stops detecting the full state at time T5, the indicator 451a is turned off.

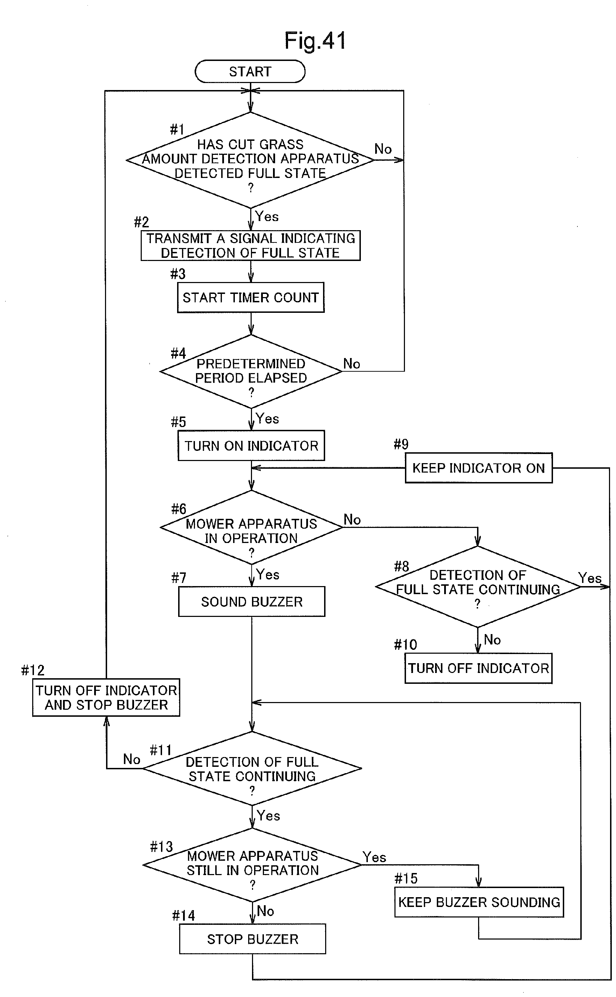

### Description of Control Flow shown in Fig. 41

Next, the flow of control through which the state in which the grass collecting container 432 is full of cut grass is detected and an alarm is issued will be described with reference to Figs. 38 and 41 (see steps #1 to #15 in Fig. 41).

First, the full-state detector 455 of the control unit 453 continuously determines whether or not the cut grass amount detection apparatus 460 has detected that the grass collecting container 432 is full of cut grass (#1). Here, the sensor plate 462 of the cut grass amount detection apparatus 460 swings due to the weight of the cut grass stored in the grass collecting container 432. If the grass collecting container 432 is not full, the sensor plate 462 does not largely swing from the reference orientation A, and the switch operation portion 462c of the sensor plate 462 presses the operation piece 466a of the detection means 466. In this state, the detection means 466 of the cut grass amount detection apparatus 460 does not transmit any signal, and the full-state detector 455 determines that the cut grass amount detection apparatus 460 has not detected the full state. Thereafter, the full-state detector 455 keeps this state without transmitting a signal until the cut grass amount detection apparatus 460 detects the full state (#1 = No).

If the grass collecting container 432 is full, the sensor plate 462 largely swings from the reference orientation A, and the switch operation portion 462c of the sensor plate 462 moves away from the operation piece 466a of the detection means 466. In this state, the detection means 466 of the cut grass amount detection apparatus 460 outputs a signal indicating that the grass collecting container 432 is full of cut grass. If the full-state detector 455 receives this signal from the detection means 466 (#1 = Yes), the full-state detector 455 may continuously transmit a signal indicating that the cut grass amount detection apparatus 460 has detected the full state, to the alarm controller 458, while receiving the aforementioned signal (#2).

Upon receiving the signal indicating that the cut grass amount detection apparatus 460 has detected the full state, the alarm controller 458 instructs the timer 454 to measure the duration of reception (the duration of detection) from when the cut grass amount detection apparatus 460 detected the full state, and transmits the duration of detection to the alarm controller 458 (#3). If the alarm controller 458 becomes unable to receive the signal indicating that the cut grass amount detection apparatus 460 has detected the full state, the alarm controller 458 instructs the timer 454 to stop counting and reset the time.

Next, the alarm controller 458 continuously receives the duration of reception from the timer 454, and determines whether or not the duration of reception has reached a predetermined period of time, e.g. three seconds (#4). If the duration of reception is less than three seconds, the above-described processing is repeated until the duration of reception reaches three seconds (#4 = No).

If the duration of reception has reached three seconds, the alarm controller 458 turns on the indicator 451a (#5).

Here, the drive detector 457 continuously determines whether or not the mower apparatus 420 is in operation (is being driven). Specifically, while driving the rotation shaft 446 that drives the mower apparatus 420, the power take-off mechanism 440 continuously transmits a signal indicating that the power take-off mechanism 440 is in operation, to the drive detector 457.

Thereafter, in a state in which it has been detected that the duration of reception has reached three seconds (#6), the alarm controller 458 determines whether or not the mower apparatus 420 is in operation, based on a signal from the power take-off mechanism 440 (#6).

If it is determined that the mower apparatus 420 is in operation (#6 = Yes), the drive detector 457 sounds the buzzer 451b (#7).

If it is determined that the mower apparatus 420 is not in operation (#6 = No), the drive detector 457 does not sound the buzzer 451b. Then, in order to thereafter continuously determine whether or not to keep the indicator 451a on, the alarm controller 458 determines whether or not the cut grass amount detection apparatus 460 is continuously detecting the full state (#8). If the alarm controller 458 determines that the cut grass amount detection apparatus 460 is continuously detecting the full state (#8 = Yes), the alarm controller 458 keeps the indicator 451a on (#9), and if the alarm controller 458 determines that the cut grass amount detection apparatus 460 no longer continuously detects the full state (#8 = No), the alarm controller 458 turns off the indicator 451a (#10).

Also, in a state in which the buzzer 451b is sounded (#7), the alarm controller 458 determines whether or not the cut grass amount detection apparatus 460 is continuously detecting the full state (#11). If the alarm controller 458 determines that the cut grass amount detection apparatus 460 is no longer continuously detecting the full state (#11 = No), the alarm controller 458 turns off the indicator 451a and stops sounding the buzzer 451b. Thereafter, processing is returned to step #1, and the detection of a full state is placed on standby (#12).

If it is determined that the cut grass amount detection apparatus 460 continuously detects the full state (#11 = Yes), the alarm controller 458 determines whether the mower apparatus 420 is continuously operating (#13). If the mower apparatus 420 is not in operation (#13 = No), the alarm controller 458 stops sounding the buzzer 451b (#14). At the same time, the alarm controller 458 keeps the indicator 451a on (#9).

If the mower apparatus 420 is in operation (#13 = Yes), the alarm controller 458 keeps sounding the buzzer 451b, returns to step #11, and continuously monitors whether or not the full state is continuing, and whether or not the mower apparatus 420 is continuously operating (#15).

With such a cut grass full-state detection apparatus, even if the cut grass amount detection apparatus 460 detects that the grass collecting container 432 is full of cut grass, the control unit 453 does not immediately activate the full-state alarm apparatus 451, and activates the full-state alarm apparatus 451 only while the cut grass amount detection apparatus 460 is continuously detecting the full state for a predetermined period or longer. Therefore, even if the cut grass amount detection apparatus 460 erroneously detects the full state due to vibration or the like, the full-state alarm apparatus 451 does not immediately operate. Therefore, it is possible to prevent the driver from performing unnecessary work in response to a full-state alarm that is based on an erroneous detection. The control unit 453 activates the full-state alarm apparatus 451 only if the cut grass amount detection apparatus 460 continuously detects the full state for a predetermined period. The predetermined period is set to be long enough such that the cut grass amount detection apparatus 460 does not detect the full state only due to the influence of vibration or the like. Therefore, the full-state alarm apparatus 451 issues a full-state alarm only when it is highly probable that the collection container 432 is full, and the driver is prompted to perform work only when it is more certain that a situation in which the grass collecting container 432 is full and the driver needs to perform work has occurred. The driver can perform appropriate work in an appropriate situation. Also, it is possible to efficiently and accurately detect that the grass collecting container is full, without adjusting the sensitivity of the cut grass amount detection apparatus 460 by changing the spring 465 (see Fig. 33). As a result, it is possible to accurately detect that the grass collecting container is full, and efficiently perform cutting work.

Furthermore, conditions for the cut grass full-state detection apparatus to control the operation of the full-state alarm apparatus 451 may include the working status of the mower apparatus 420. During cutting work, the driver concentrates on cutting work, and it is difficult for the driver to notice a full-state alarm if the alarm needs to be visually checked, such as in the case of the indicator 451a. Also, a full-state alarm that is issued when cutting work is not performed is often an erroneous alarm, and the amount of stored cut grass does not increase in such a case, and there is often no need to respond to the alarm in such a case. Therefore, when cutting work is not performed, only the indicator 451a is turned on, and the buzzer 451b, which does not require a visual check, is additionally sounded only during cutting work. As a result, it is possible to issue an appropriate alarm that is suitable for the work situation, and it is possible to perform more efficient cutting work.

### Variations of Fourth Embodiment

(1) The timer 454 is not limited to being provided in the full-state detector 455, and may be provided in the control unit 453 or the operation panel 450. Furthermore, the control unit 453, the timer 454, and the full-state alarm apparatus 451 are not limited to being provided in the operation panel 450, and may each be provided at any location as long as the cut grass amount detection apparatus 460, the power take-off mechanism 440, the timer 454, and the full-state alarm apparatus 451 can perform data communication with the control unit 453. Also, the full-state detector 455, the drive detector 457, and the alarm controller 458 may be combined in any manner so that they are constituted by one or more functional components. Also, although the full-state detector 455, the drive detector 457, the alarm controller 458, or a functional component constituted by a combination of them may be provided in the single control unit 453, they may be provided independent of each other, and may be dispersedly provided in a plurality of control units. Furthermore, these functional components are not limited to being constituted by hardware, and may be realized using software such as a program. In such a case, a program is executed by a processor such as the control unit 453, and the program per se is stored in a storage unit, which is not shown.
(2) Although the cut grass amount detection apparatus 460 uses the operation piece 466a to detect whether or not the grass collecting container 432 is full, it is possible to measure the amount of cut grass stored in the grass collecting container 432 and determine whether or not the grass collecting container 432 is full based on the amount of cut grass.
(3) The driving state of the rotation shaft 446, which is a PTO shaft, is not necessarily detected. In such a case, the buzzer 451b is sounded at the same time when the indicator 451a is turned on.
(4) Although a configuration in which the indicator 451a and the buzzer 451b are provided as full-state alarm apparatuses 451 is described above as an example, a full-state alarm apparatus 451 may be constituted by one or more alarm apparatuses of various types.
(5) The cut grass amount detection apparatus 460 does not necessarily detect the full state, and may detect a predetermined amount of cut grass that is smaller than the full state, taking a certain margin into consideration, and transmit the amount to the full-state detector 455.

## Claims

1. A cut grass full-state detection apparatus that detects a full state of a grass collecting container (432) that stores cut grass cut by a mower apparatus, comprising:
a cut grass amount detection unit (460) configured to detect the amount of cut grass stored in the grass collecting container;
a notification unit (451, 451a, 451b), wherein the notification unit (451) includes a first notification unit (451a) and a second notification unit (451b);
a timer (454);
a control unit (453), the control unit being configured to instruct the timer to measure a time period that has elapsed from when the cut grass amount detection unit detected a predetermined amount of cut grass, and instruct the notification unit to issue an alarm when the cut grass amount detection unit continuously detects the predetermined amount of cut grass for a predetermined period;
**characterized in that** it further comprises a drive detection unit (457) configured to detect that the mower apparatus is being driven,
the control unit is configured such that
if the drive detection unit (457) has not detected that the mower apparatus is being driven, the control unit (453) instructs the first notification unit (451a) to issue an alarm when the cut grass amount detection unit has continuously detected the predetermined amount of cut grass for the predetermined period, and
if the drive detection unit (457) has detected that the mower apparatus is being driven, the control unit instructs the first notification unit (451a) and the second notification unit (451b) to issue an alarm when the cut grass amount detection unit has continuously detected the predetermined amount of cut grass for the predetermined period.

2. The cut grass full-state detection apparatus according to claim 1,
wherein the control unit (453) is configured to stop the notification unit (451) from issuing an alarm when the cut grass amount detection unit (460) detects that the amount of cut grass has fallen below the predetermined amount while the notification unit issues the alarm.

3. The cut grass full-state detection apparatus according to claim 1,
wherein the control unit (453) is configured to
stop the first notification unit (451a) from issuing an alarm when the cut grass amount detection unit detects that the amount of cut grass has fallen below the predetermined amount while the first notification unit issues the alarm, and
stop the second notification unit (451b) from issuing an alarm when the cut grass amount detection unit detects that the amount of cut grass has fallen below the predetermined amount, or the drive detection unit is no longer detecting that the mower apparatus is being driven, while the second notification unit issues the alarm.

4. The cut grass full-state detection apparatus according to any one of claims 1 to 3,
wherein the first notification unit (451a) is an indicator, and the second notification unit (451b) is a buzzer.

## Patentansprüche

1. Vorrichtung zum Nachweis des vollen Zustands von geschnittenem Gras, die einen vollen Zustand eines Grassammelbehälters (432) nachweist, der geschnittenes Gras speichert, das von einer Mähvorrichtung geschnitten wurde, umfassend:
eine Einheit zum Nachweis einer Menge von geschnittenem Gras (460), die konfiguriert ist, um die Menge von geschnittenem Gras nachzuweisen, die in dem Grassammelbehälter gespeichert ist;
eine Benachrichtigungseinheit (451, 451a, 451b), wobei die Benachrichtigungseinheit (451) eine erste Benachrichtigungseinheit (451a) und eine zweite Benachrichtigungseinheit (451b) beinhaltet;
einen Zeitschalter (454);
eine Steuereinheit (453), wobei die Steuereinheit (43) konfiguriert ist, um den Zeitschalter anzuweisen, einen Zeitraum zu messen, der von dem Zeitpunkt verstrichen ist, an dem die Einheit zum Nachweis einer Menge von geschnittenem Gras eine vorbestimmte Menge von geschnittenem Gras nachgewiesen hat, und die Nachweiseinheit anzuweisen, einen Alarm auszugeben, wenn die Einheit zum Nachweis einer Menge von geschnittenem Gras kontinuierlich die vorbestimmte Menge von geschnittenem Gras während eines vorbestimmten Zeitraums nachweist,
**dadurch gekennzeichnet, dass** sie weiter eine Antriebsnachweiseinheit (457) umfasst, die konfiguriert ist, um nachzuweisen, dass die Mähvorrichtung angetrieben wird und die Steuereinheit derart konfiguriert ist, dass,
wenn die Antriebsnachweiseinheit (457) nicht nachgewiesen hat, dass die Mähvorrichtung angetrieben wird, die Steuereinheit (453) die erste Benachrichtigungseinheit (451a) anweist, einen Alarm auszugeben, wenn die Einheit zum Nachweis einer Menge von geschnittenem Gras kontinuierlich die vorbestimmte Menge von geschnittenem Gras für den vorbestimmten Zeitraum nachgewiesen hat, und
wenn die Antriebsnachweiseinheit (457) nachgewiesen hat, dass die Mähvorrichtung angetrieben wird, die Steuereinheit die erste Benachrichtigungseinheit (451a) und die zweite Benachrichtigungseinheit (451b) anweist, einen Alarm auszugeben, wenn die Einheit zum Nachweis einer Menge von geschnittenem Gras kontinuierlich die vorbestimmte Menge von geschnittenem Gras für den vorbestimmten Zeitraum nachgewiesen hat.

2. Vorrichtung zum Nachweis des vollen Zustands von geschnittenem Gras nach Anspruch 1,
wobei die Steuereinheit (453) konfiguriert ist, um die Benachrichtigungseinheit (451) daran zu hindern, einen Alarm auszugeben, wenn die Einheit zum Nachweis einer Menge von geschnittenem Gras (460) nachweist, dass die Menge von geschnittenem Gras unter die vorbestimmte Menge gefallen ist, während die Benachrichtigungseinheit den Alarm ausgibt.

3. Vorrichtung zum Nachweis des vollen Zustands von geschnittenem Gras nach Anspruch 1,
wobei die Steuereinheit (453) konfiguriert ist,
um die erste Benachrichtigungseinheit (451a) daran zu hindern, einen Alarm auszugeben, wenn die Einheit zum Nachweis einer Menge von geschnittenem Gras nachweist, dass die Menge von geschnittenem Gras unter die vorbestimmte Menge gefallen ist, während die erste Benachrichtigungseinheit den Alarm ausgibt, und
die zweite Benachrichtigungseinheit (451b) daran zu hindern, einen Alarm auszugeben, wenn die Einheit zum Nachweis einer Menge von geschnittenem Gras nachweist, dass die Menge von geschnittenem Gras unter die vorbestimmte Menge gefallen ist, oder die Antriebsnachweiseinheit nicht mehr nachweist, dass die Mähvorrichtung angetrieben wird, während die zweite Benachrichtigungseinheit den Alarm ausgibt.

4. Vorrichtung zum Nachweis des vollen Zustands von geschnittenem Gras nach einem der Ansprüche 1 bis 3,
wobei die erste Benachrichtigungseinheit (451a) eine Anzeige ist und die zweite Benachrichtigungseinheit (451b) ein Summer ist.

## Revendications

1. Appareil de détection d'état plein d'herbe coupée qui détecte un état plein d'un contenant de collecte d'herbe (432) qui stocke l'herbe coupée, coupée par une tondeuse, comprenant :
une unité de détection de quantité d'herbe coupée (460) configurée pour détecter la quantité d'herbe coupée stockée dans le contenant de collecte d'herbe ;
une unité de notification (451, 451a, 451b), dans lequel l'unité de notification (451) comprend une première unité de notification (451a) et une deuxième unité de notification (451b) ;
un minuteur (454) ;
une unité de commande (453), l'unité de commande étant configurée pour donner l'instruction au minuteur de mesurer une période de temps qui s'est écoulée à partir du moment où l'unité de détection de quantité d'herbe coupée a détecté une quantité prédéterminée d'herbe coupée, et donner l'instruction à l'unité de notification de faire retentir une alarme lorsque l'unité de détection de quantité d'herbe coupée détecte, de manière continue, la quantité prédéterminée d'herbe coupée pendant une période prédéterminée ;
**caractérisé en ce qu'**il comprend en outre une unité de détection d'entraînement (457) configurée pour détecter que la tondeuse est entraînée, et
l'unité de commande est configurée de sorte que :
si l'unité de détection d'entraînement (457) n'a pas détecté que la tondeuse est entraînée, l'unité de contrôle (453) donne l'instruction à la première unité de notification (451a) de faire retentir une alarme lorsque l'unité de détection de quantité d'herbe coupée a détecté, de manière continue, la quantité prédéterminée d'herbe coupée pendant la période prédéterminée, et
si l'unité de détection d'entraînement (457) a détecté que la tondeuse est entraînée, l'unité de commande donne l'instruction à la première unité de notification (451a) et à la deuxième unité de notification (451b) de faire retentir une alarme lorsque l'unité de détection de quantité d'herbe coupée a détecté, de manière continue, la quantité prédéterminée d'herbe coupée pendant la période prédéterminée.

2. Appareil de détection d'état plein d'herbe coupée selon la revendication 1,
dans lequel l'unité de commande (453) est configurée pour arrêter le fait de faire retentir une alarme par l'unité de notification (451) lorsque l'unité de détection de quantité d'herbe coupée (460) détecte que la quantité d'herbe coupée a chuté au-dessous de la quantité prédéterminée alors que l'unité de notification fait retentir l'alarme.

3. Appareil de détection d'état plein d'herbe coupée selon la revendication 1,
dans lequel l'unité de commande (453) est configurée pour :
empêcher la première unité de notification (451a) de faire retentir une alarme lorsque l'unité de détection de quantité d'herbe coupée détecte que la quantité d'herbe coupée a chuté au-dessous de la quantité prédéterminée alors que la première unité de notification fait retentir l'alarme, et
empêcher la deuxième unité de notification (451b) de faire retentir une alarme lorsque l'unité de détection de quantité d'herbe coupée détecte que la quantité d'herbe coupée a chuté au-dessous de la quantité prédéterminée ou bien que l'unité de détection d'entraînement ne détecte plus que la tondeuse est entraînée, alors que la deuxième unité de notification fait retentir l'alarme.

4. Appareil de détection d'état plein d'herbe coupée selon l'une quelconque des revendications 1 à 3,
dans lequel la première unité de notification (451a) est un indicateur, et la deuxième unité de notification (451b) est un avertisseur sonore.
